# EUROPEAN PATENT SPECIFICATION

(11) **EP 2 473 050 B1**
(45) Date of publication and mention of the grant of the patent: **24.07.2013**
(21) Application number: 10752511.5
(22) Date of filing: 03.09.2010
(51) Int. Cl.: A01N 43/56, A01N 25/04, A01N 25/30, A01P 7/04

(54) **N-(CYANOPHENYL)PYRAZOLECARBOXAMIDE AQUEOUS FORMULATION**
WÄSSRIGE N-(CYANOPHENYL)PYRAZOLCARBOXAMID FORMULIERUNG
FORMULATION AQUEUSE DE N-(CYANOPHENYL)PYRAZOLECARBOXAMIDE

(30) Priority: 04.09.2009 US 239902 P
(43) Date of publication of application: 11.07.2012
(73) Proprietor: E. I. du Pont de Nemours and Company, Wilmington, DE 19898 (US)
(72) Inventor: GUTSCHE, Oliver, Walter, Wilmington DE 19810 (US); GREEN, John, Henry, Oxford PA 19363 (US)
(74) Representative: Beacham, Annabel Rose
(86) International application number: PCT/US2010/047797
(87) International publication number: WO 2011/028993

(56) References cited:
- WO-A1-2008/069990
- WO-A1-2009/002856

## Description

### FIELD OF THE INVENTION

This invention relates to certain aqueous suspension concentrate compositions comprising 3-bromo-1-(3-chloro-2-pyridinyl)-*N*-[4-cyano-2-methyl-6-[(methylamino)-carbonyl]phenyl]-1*H*-pyrazole-5-carboxamide.

### BACKGROUND OF THE INVENTION

Typically chemical compounds for protecting plants, e.g., insecticides, are formulated as compositions (formulations) comprising the active compound(s) and inert ingredients such as carriers and adjuvants. These compositions can be applied by the user to the target plants/pests undiluted or after dilution with water. Liquid formulation concentrates are among the most commonly used formulations for plant protection chemicals, because they can be easily measured and poured, and when diluted with water typically form easily sprayed aqueous solutions or dispersions.

Generally inert ingredients in formulations should not cause decomposition of the active ingredient or substantially reduce its biological activity on application, as well as being nonphytotoxic and environmentally safe. Water is a particularly desirable formulating ingredient to form the continuous liquid carrier medium of liquid formulation concentrates, because it is very inexpensive, environmentally safe and compatible with further dilution with water before spraying. Inert ingredients in formulations intended for dilution with water before application should be easily dissolved or dispersed in water. For liquid formulations, inert ingredients should also not cause appreciable precipitation or crystal growth of the active ingredient upon long-term storage. Indeed for suspension concentrate formulations comprising solid particles of active ingredient dispersed in a liquid medium, inert ingredients are often included to promote suspension of the particles and retard their settling.

Certain insecticides are capable of transport within a plant's vascular system (e.g., phloem) to provide systemic protection of foliage (including newly emerging foliage) beyond the foliage to which the insecticides are applied. Furthermore, insecticidal concentrations of insecticides in a plant's vascular system are particularly desirable for controlling insect pests that primarily obtain nourishment by extracting plant sap from the internal structures of plant parts such as leaves. Particularly noteworthy examples of such insect pests are piercing-sucking pests of the order Homoptera, such as members of the family Aleyrodidae (whiteflies), the family Aphidadae (aphids), the family Delphacidae (planthoppers) and the family Cicadellidae (leafhoppers).

Although the distribution of systemic insecticide active ingredients in mesophyll cells, vascular system and other tissues depends upon the physical properties (e.g., octanol-water partition coefficient, "log P") of the insecticide molecules, the initial penetration and translaminar movement of the insecticide active ingredients through the leaf cuticle and epidermal cells can depend also on the other ingredients in the applied composition. Because the leaf cuticle is waxy, water-based compositions inherently have little propensity to wet the cuticle to promote contact. Uptake may be promoted by inclusion of ingredients to improve contact and adhesion and possibly even structurally modify the waxy cuticle layer to facilitate penetration of the active ingredients. Besides facilitating systemic transport, absorption of the active ingredient from the plant surface into the plant can also improve wash-off resistance.

PCT publication WO 2008/069990 discloses certain aqueous suspension concentrate compositions comprising by weight based on the total weight of the composition from about 0.1 to about 50% of one or more carboxamide arthropodicides that are solid at room temperature, e.g., 3-bromo-1-(3-chloro-2-pyridinyl)-*N*-[4-cyano-2-methyl-6-[(methylamino)-carbonyl]phenyl]-1*H*-pyrazole-5-carboxamide, from about 10 to about 70% of one or more water-immiscible liquid compounds (soluble in water to an extent of less than 2% by weight at 20 °C) and from about 1 to about 55% of a surfactant component having a dispersing property. This publication discloses that including methyl soyate as a water-immiscible liquid compound in an aqueous suspension concentrate composition can increase control of the sucking insect *Bemisia argentifolii* (silverleaf whitefly) and improve rainfastness (resistance to wash-off).

Such water-immiscible liquid compounds as mineral oils and vegetable oils can also be used in high concentrations to kill certain insect pests by smothering them. For this purpose, these oils are known and marketed as dormant oils, horticultural oils and spray oils. However, as described in the article "What is Horticultural Oil and Dormant Oil?" published in Weekend Gardener Monthly Web Magazine, June 2009 (available June 30, 2009 from http://www.weekendgardener.net/garden-pests/dormantoil-010901.htm) the main limitation of these oils is their potential to cause plant injury (phytotoxicity) in some situations. Certain plant species are particularly sensitive to oils. To minimize risk of phytotoxicity, oils are best sprayed before buds begin to swell, and spraying oils on trees which are in full bloom is generally not recommended. Commercial growers also may be reluctant to spray oils on plant produce, e.g., fruits, whose market value depends upon complete absence of injury.

Although water-immiscible liquid compounds are generally included in the compositions of PCT publication WO 2008/069990 in much lower amounts than when used alone for insect pest control, the potential of water-immiscible liquid compounds to cause phytotoxicity may raise concern in some situations. Therefore an aqueous suspension concentrate composition of 3-bromo-1-(3-chloro-2-pyridinyl)-*N*-[4-cyano-2-methyl-6-[(methylamino)carbonyl]phenyl]-1*H*-pyrazole-5-carboxamide that promotes penetration of this active ingredient without relying upon water-immiscible compounds is desirable. Such a composition has now been discovered.

### SUMMARY OF THE INVENTION

This invention is directed to an insecticidal suspension concentrate composition comprising by weight based on the total weight of the composition:
(a) from about 0.3 to about 30% of 3-bromo-1-(3-chloro-2-pyridinyl)-*N*-[4-cyano-2-methyl-6-[(methylamino)carbonyl]phenyl]-1*H*-pyrazole-5-carboxamide;
(b) from about 5 to about 70% of a nonionic ethylene oxide-propylene oxide block copolymer component having a water solubility of at least about 5% by weight at 20 °C, a hydrophilic-lipophilic balance value ranging from about 5 to about 18 and an average molecular weight ranging from about 900 to about 20000 daltons; and
(c) from about 20 to about 95% of water,
wherein the composition comprises not more than about 5% by weight of water-immiscible liquid compounds.

This invention also relates to a method for controlling an insect pest comprising diluting said suspension concentrate composition with water to form a diluted composition, and contacting the insect pest or its environment with an insecticidally effective amount of said diluted composition.

### DETAILED DESCRIPTION OF THE INVENTION

As used herein, the terms "comprises," "comprising," "includes," "including," "has," "having," "contains", "containing," "characterized by" or any other variation thereof, are intended to cover a non-exclusive inclusion, subject to any limitation explicitly indicated. For example, a composition, mixture, process, or method that comprises a list of elements is not necessarily limited to only those elements but may include other elements not expressly listed or inherent to such composition, mixture, process, or method.

The transitional phrase "consisting of" excludes any element, step, or ingredient not specified. If in a claim, "consisting of" would close the claim to the inclusion of materials other than those recited except for impurities ordinarily associated therewith. When the phrase "consisting of" appears in a clause of the body of a claim, rather than immediately following the preamble, it limits only the element set forth in that clause; other elements are not excluded from the claim as a whole.

The transitional phrase "consisting essentially of" is used to define a composition or method that includes materials, steps, features, components, or elements, in addition to those literally disclosed, provided that these additional materials, steps, features, components, or elements do not materially affect the basic and novel characteristic(s) of the claimed invention. The term "consisting essentially of" occupies a middle ground between "comprising" and "consisting of".

Where applicants have defined an invention or a portion thereof with an open-ended term such as "comprising," it should be readily understood that (unless otherwise stated) the description should be interpreted to also describe such an invention using the terms "consisting essentially of" or "consisting of."

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, the indefinite articles "a" and "an" preceding an element or component of the invention are intended to be nonrestrictive regarding the number of instances (i.e. occurrences) of the element or component. Therefore "a" or "an" should be read to include one or at least one, and the singular word form of the element or component also includes the plural unless the number is obviously meant to be singular.

In the context of the present disclosure and claims, protection of foliage from a phytophagous insect pest means protection of the foliage from injury or damage potentially caused by the insect pest. The protection is achieved through control of the insect pest. The term "foliage" refers to parts of a plant exposed above ground. Therefore foliage includes leaves, stems, branches, flowers, fruits and buds. Control of an insect pest can include killing the insect pest, interfering with its growth, development or reproduction, and/or inhibiting its feeding. In the present disclosure and claims the terms "insecticidal" and "insecticidally" relate to any form of insect control.

The term "suspension concentrate composition" and derivative terms such as "an insecticidal suspension concentrate composition" refer to compositions comprising finely divided solid particles of an active ingredient dispersed in a continuous liquid phase. Said particles retain identity and can be physically separated from the continuous liquid phase. The viscosity of the continuous liquid phase can vary from low to high, and indeed can be so high as to cause the suspension concentrate composition to have a gel-like or paste-like consistency.

The term "particle size" refers to the equivalent spherical diameter of a particle, i.e. the diameter of a sphere enclosing the same volume as the particle. "Median particle size" is the particle size corresponding to half of the particles being larger than the median particle size and half being smaller. With reference to particle size distribution, percentages of particles are also on a volume basis (e.g., "at least 95% of the particles are less than about 10 microns" means that at least 95% of the aggregate volume of particles consists of particles having equivalent spherical diameters of less than about 10 microns). The principles of particle size analysis are well known to those skilled in the art; for a technical paper providing a summary, see A. Rawle, "Basic Principles of Particle Size Analysis" (document MRK034 published by Malvern Instruments Ltd., Malvern, Worcestershire, UK). Volume distributions of particles in powders can be conveniently measured by such techniques as Low Angle Laser Light Scattering (also known as LALLS and Laser Diffraction), which relies on the fact that diffraction angle is inversely proportional to particle size. Commercially available instruments suitable for analyzing using LALLS the volume distributions of particles in powders include the Mastersizer 2000 (Malvern Instruments).

In the present disclosure and claims, "EO/PO" is an abbreviation for "ethylene oxide-propylene oxide". In percentage ranges, if the percent sign "%" is shown after only the second number delimiting a range, it refers to both numbers delimiting the range. For example, "from about 0.3 to about 30%" means "from about 0.3% to about 30%".

Embodiments of the present invention include:
Embodiment 1. The composition described in the Summary of the Invention wherein component (a) (i.e. the 3-bromo-1-(3-chloro-2-pyridinyl)-*N*-[4-cyano-2-methyl-6-[(methylamino)carbonyl]phenyl]-1*H*-pyrazole-5-carboxamide) is at least about 1% of the composition by weight.
Embodiment 2. The composition of Embodiment 1 wherein component (a) is at least about 2% of the composition by weight.
Embodiment 3. The composition of Embodiment 2 wherein component (a) is at least about 5% of the composition by weight.
Embodiment 4. The composition described in the Summary of the Invention or any one of Embodiments 1 through 3 wherein component (a) is not more than about 20% of the composition by weight.
Embodiment 5. The composition of Embodiment 4 wherein component (a) is not more than about 15% of the composition by weight.
Embodiment 6. The composition described in the Summary of the Invention or any one of Embodiments 1 through 5 wherein at least about 90% of component (a) is present in the composition as solid particles.
Embodiment 7. The composition of Embodiment 6 wherein at least about 95% of component (a) is present in the composition as solid particles.
Embodiment 8. The composition of Embodiment 7 wherein at least about 98% of component (a) is present in the composition as solid particles.
Embodiment 9. The composition of any one of Embodiments 6 through 8 wherein more than 95% by weight of the particles have a particle size less than about 10 µm.
Embodiment 10. The composition of any one of Embodiments 6 through 9 wherein the median particle size of the particles is not more than about 4 µm.
Embodiment 11. The composition of Embodiment 10 wherein the median particle size of the particles is not more than about 3 µm.
Embodiment 12. The composition of Embodiment 11 wherein the median particle size of the particles is not more than about 2 µm.
Embodiment 13. The compositions of any one of Embodiments 6 through 12 wherein the median particle size of the particles is at least about 0.1 µm.
Embodiment 13a. The composition of Embodiment 13 wherein the median particle size of the particles is at least about 0.4 µm.
Embodiment 14. The composition described in the Summary of the Invention or any one of Embodiments 1 through 13a wherein component (b) (i.e. the nonionic ethylene oxide-propylene oxide (EO/PO) block copolymer component) has a water solubility of at least about 10% at 20 °C.
Embodiment 15. The composition described in the Summary of the Invention or any one of Embodiments 1 through 14 wherein component (b) has a hydrophilic-lipophilic balance (HLB) value of at least about 6.
Embodiment 16. The composition of Embodiment 15 wherein component (b) has an HLB value of at least about 7.
Embodiment 17. The composition of Embodiment 16 wherein component (b) has an HLB value of at least about 8.
Embodiment 18. The composition described in the Summary of the Invention or any one of Embodiments 1 through 17 wherein component (b) has an HLB value of not more than about 17.
Embodiment 19. The composition of Embodiment 18 wherein component (b) has an HLB value of not more than about 16.
Embodiment 20. The composition of Embodiment 19 wherein component (b) has an HLB value of not more than about 15.
Embodiment 21. The composition described in the Summary of the Invention or any one of Embodiments 1 through 20 wherein component (b) (i.e. the nonionic EO/PO block copolymer component) has an average molecular weight of at least about 1000 daltons.
Embodiment 22. The composition of Embodiment 21 wherein component (b) has an average molecular weight of at least about 2000 daltons.
Embodiment 23. The composition described in the Summary of the Invention or any one of Embodiments 1 through 22 wherein component (b) has an average molecular weight of not more than about 15000 daltons.
Embodiment 24. The composition of Embodiment 23 wherein component (b) has an average molecular weight of not more than about 10000 daltons.
Embodiment 24a. The composition of Embodiment 24 wherein component (b) has an average molecular weight of not more than about 8000 daltons.
Embodiment 25. The composition of Embodiment 24a wherein component (b) has an average molecular weight of not more than about 7000 daltons.
Embodiment 26. The composition described in the Summary of the Invention or any one of Embodiments 1 through 25 wherein component (b) (i.e. the nonionic EO/PO block copolymer component) is at least about 10% of the composition by weight.
Embodiment 27. The composition of Embodiment 26 wherein component (b) is at least about 15% of the composition by weight.
Embodiment 28. The composition of Embodiment 27 wherein component (b) is at least about 20% of the composition by weight.
Embodiment 29. The composition described in the Summary of the Invention or any one of Embodiments 1 through 28 wherein component (b) is not more than about 60% of the composition by weight.
Embodiment 30. The composition of Embodiment 29 wherein component (b) is not more than about 50% of the composition by weight.
Embodiment 31. The composition described in the Summary of the Invention or any one of Embodiments 1 through 30 wherein component (b) and component (a) are in a ratio of at least about 1 : 1 of component (b) to component (a) by weight.
Embodiment 32. The composition of Embodiment 31 wherein the ratio of component (b) to component (a) is at least about 2 : 1.
Embodiment 33. The composition of Embodiment 32 wherein the ratio of component (b) to component (a) is at least about 4 : 1.
Embodiment 34. The composition of Embodiment 33 wherein the ratio of component (b) to component (a) is at least about 8 : 1 .
Embodiment 35. The composition described in the Summary of the Invention or any one of Embodiments 1 through 34 wherein component (b) and component (a) are in a ratio of not more than about 20 : 1 of component (b) to component (a) by weight.
Embodiment 36. The composition of Embodiment 35 wherein the ratio of component (b) to component (a) is not more than about 15 : 1.
Embodiment 37. The composition described in the Summary of the Invention or any one of Embodiments 1 through 36 wherein component (b) comprises one or more nonionic EO/PO block copolymers selected from the group consisting of poloxamers, reverse poloxamers, poloxamines and reverse poloxamines.
Embodiment 38. The composition of Embodiment 37 wherein component (b) comprises one or more nonionic EO/PO block copolymers selected from the group consisting of poloxamers and poloxamines.
Embodiment 39. The composition of Embodiment 37 wherein component (b) comprises one or more nonionic EO/PO block copolymers selected from the group consisting of poloxamers and reverse poloxamers.
Embodiment 40. The composition of Embodiment 38 or 39 wherein component (b) comprises one or more nonionic EO/PO block copolymers selected from poloxamers.
Embodiment 41. The composition of Embodiment 40 wherein component (b) consists essentially of one or more poloxamers.
Embodiment 42. The composition of Embodiment 40 or 41 wherein the poloxamers have a polyoxypropylene chain with an average molecular weight of at least about 900 daltons.
Embodiment 43. The composition of Embodiment 42 wherein the polyoxypropylene chain has an average molecular weight of at least about 1200 daltons.
Embodiment 44. The composition of any one of Embodiments 40 through 43 wherein the poloxamers have a polyoxypropylene chain with an average molecular weight of not more than about 9000 daltons.
Embodiment 45. The composition of Embodiment 44 wherein the polyoxypropylene chain has an average molecular weight of not more than about 4000 daltons.
Embodiment 46. The composition of Embodiment 45 wherein the polyoxypropylene chain has an average molecular weight of not more than about 3000 daltons.
Embodiment 47. The composition of Embodiment 46 wherein the polyoxypropylene chain has an average molecular weight of not more than about 2000 daltons.
Embodiment 48. The composition of any one of Embodiments 40 through 47 wherein the poloxamers have a polyoxyethylene content of at least about 10% by weight.
Embodiment 49. The composition of Embodiment 48 wherein the polyoxyethylene content is at least about 20% by weight.
Embodiment 50. The composition of any one of Embodiments 37 through 49 wherein the poloxamers, poloxamines, reverse poloxamers and reverse poloxamines have a polyoxyethylene content of not more than about 50% by weight.
Embodiment 51. The composition described in the Summary of the Invention or any one of Embodiments 1 through 50 wherein component (c) (i.e. the water) is at least about 25% of the composition by weight.
Embodiment 52. The composition of Embodiment 51 wherein component (c) is at least about 30% of the composition by weight.
Embodiment 53. The composition of Embodiment 52 wherein component (c) is at least about 35% of the composition by weight.
Embodiment 54. The composition of Embodiment 53 wherein component (c) is at least about 40% of the composition by weight.
Embodiment 55. The composition described in the Summary of the Invention or any one of Embodiments 1 through 54 wherein component (c) is not more than about 55% by weight.
Embodiment 56. The composition of Embodiment 55 wherein component (c) is not more than about 50% by weight.
Embodiment 57. The composition described in the Summary of the Invention or any one of Embodiments 1 through 56 further comprising (d) up to about 10% by weight of an additional surfactant component.
Embodiment 58. The composition of Embodiment 57 wherein component (d) (i.e. the additional surfactant component) is at least about 0.01% of the composition by weight.
Embodiment 58a. The composition of Embodiment 58 wherein component (d) is at least about 0.1 % of the composition by weight.
Embodiment 59. The composition of Embodiment 58a wherein component (d) is at least about 1% of the composition by weight.
Embodiment 60. The composition of Embodiment 59 wherein component (d) is at least about 2% of the composition by weight.
Embodiment 61. The composition of any one of Embodiments 57 through 60 wherein component (d) is not more than about 8% of the composition by weight.
Embodiment 62. The composition of Embodiment 61 wherein component (d) is not more than about 6% of the composition by weight.
Embodiment 63. The composition of Embodiment 62 wherein component (d) is not more than about 4% of the composition by weight.
Embodiment 64. The composition described in the Summary of the Invention or any one of Embodiments 1 through 63 further comprising (e) up to about 25% by weight of one or more biologically active agents other than 3-bromo-1-(3-chloro-2-pyridinyl)-*N*-[4-cyano-2-methyl-6-[(methylamino)carbonyl]phenyl]-1*H-*pyrazole-5-carboxamide (cyantraniliprole).
Embodiment 65. The composition of Embodiment 64 wherein component (e) (i.e. biologically active agents other than cyantraniliprole) is at least about 0.1% of the composition by weight.
Embodiment 66. The composition of Embodiment 65 wherein component (e) is at least about 1% of the composition by weight.
Embodiment 67. The composition of any one of Embodiments 64 through 66 wherein component (e) is not more than about 20% of the composition by weight.
Embodiment 68. The composition of Embodiment 67 wherein component (e) is not more than about 15% of the composition by weight.
Embodiment 69. The composition of Embodiment 68 wherein component (e) is not more than about 10% of the composition by weight.
Embodiment 70. The composition of any one of Embodiments 64 through 69 wherein component (e) is selected from biologically active agents other than biological organisms (i.e. excluding e.g., viruses, bacteria and fungi).
Embodiment 71. The composition of any one of Embodiments 64 through 70 wherein component (e) comprises at least one insecticide or acaricide.
Embodiment 72. The composition of any one of Embodiments 64 through 71 wherein component (e) comprises at least one fungicide or bactericide.
Embodiment 73. The composition described in the Summary of the Invention or any one of Embodiments 1 to 63 not comprising a biologically active agent other than cyantraniliprole.
Embodiment 74. The composition described in the Summary of the Invention or any one of Embodiments 1 through 73 further comprising (f) up to about 15% by weight of one or more additional formulating ingredients.
Embodiment 75. The composition of Embodiment 74 wherein component (f) (i.e. the additional formulating ingredients) is at least about 0.01% of the composition by weight.
Embodiment 75a. The composition of Embodiment 75 wherein component (f) is at least about 0.1% of the composition by weight.
Embodiment 76. The composition of any one of Embodiments 74, 75 and 75a wherein component (f) comprises at least one formulating ingredient selected from antifreeze agents, preservatives, thickening agents and fertilizers.
Embodiment 77. The composition of Embodiment 76 wherein component (f) comprises at least one formulating ingredient selected from antifreeze agents.
Embodiment 78. The composition of Embodiment 77 wherein the antifreeze agents are selected from the group consisting of ethylene glycol, diethylene glycol, propylene glycol, dipropylene glycol, glycerol, 1,3-propanediol, 1,2 propanediol and polyethylene glycol of molecular weight in the range from about 200 to about 1000 daltons.
Embodiment 79. The composition of Embodiment 78 wherein the antifreeze agents are selected from ethylene glycol and propylene glycol.
Embodiment 80. The composition of any one of Embodiments 76 through 79 wherein the weight ratio of antifreeze agents to water (i.e. component (c)) is in the range of about 1 : 5 to about 1 : 20.
Embodiment 81. The composition of any one of Embodiments 76 through 79 wherein component (f) comprises one or more preservatives in an amount from about 0.01 % to about 1% of the composition by weight.
Embodiment 82. The composition of any one of Embodiments 76 through 80 wherein component (f) comprises one or more thickening agents in an amount from about 0.1% to about I % of the composition by weight.
Embodiment 83. The composition of Embodiment 82 wherein the composition comprises not more than about 2% by weight of water-immiscible liquid compounds.
Embodiment 84. The composition of Embodiment 83 wherein the composition comprises not more than about 1% by weight of water-immiscible liquid compounds.
Embodiment 85. The composition of Embodiment 84 wherein the composition comprises not more than about 0.1 % by weight of water-immiscible liquid compounds.
Embodiment 86. The composition described in the Summary of the Invention or any one of Embodiments 1 through 8,5 wherein component (b) is completely dissolved in component (c).
Embodiment 87. The composition described in the Summary of the Invention or any one of Embodiments 1 through 86 wherein the composition contains a single liquid phase.
Embodiment 88. The composition of Embodiment 87 wherein the single liquid phase is formed by components (b) and (c).
Embodiment 89. The composition of Embodiment 87 or 88 wherein the single liquid phase comprises components (b) and (c).
Embodiment 90. The composition of any one of Embodiments 87 through 89 wherein particles of component (a) are dispersed in the single liquid phase.
Embodiment 91. A method for controlling an insect pest comprising diluting the composition described in the Summary of the Invention or any one of Embodiments 1-90 with water to form a diluted composition, and contacting the insect pest or its environment with an insecticidally effective amount of said diluted composition.
Embodiment 92. The method of Embodiment 91 wherein plant foliage in the environment of the insect pest is contacted with the insecticidally effective amount of said diluted composition.
Embodiment 93. A method for protecting foliage of a plant from a phytophagous insect pest, the method comprising contacting the foliage with an insecticidally effective amount of the diluted composition of Embodiment 91.
Embodiment 94. The method of any one of Embodiments 91 through 93 wherein the insect pest is in a taxonomic family selected from Aleyrodidae, Aphidadae, Delphacidae and Cicadellidae.
Embodiment 95. The method of any one of Embodiments 91 through 94 wherein the insect pest is a piercing-sucking pest (i.e. feeds by piercing and sucking nutrients from plant foliage).

Embodiments of this invention can be combined in any manner. An example of such combination is the composition described in the Summary of the Invention comprising by weight (a) from about 5 to about 15% of 3-bromo-1-(3-chloro-2-pyridinyl)-*N*-[4-cyano-2-methyl-6-[(methylamino)carbonyl]phenyl]-1*H*-pyrazole-5-carboxamide; (b) from about 20 to about 60% of a nonionic EO/PO block copolymer component having a water solubility of at least about 5% by weight at 20 °C, an HLB value ranging from about 5 to about 17 and an average molecular weight ranging from about 2000 to about 10000 daltons; (c) from about 30 to about 50% of water; optionally (d) from about 0.1 to about 6% of an additional surfactant component; optionally (e) from about 0.1% to about 15% of one or more biologically active agents other than 3-bromo-1-(3-chloro-2-pyridinyl)-*N*-[4-cyano-2-methyl-6-[(methylamino)carbonyl]phenyl]-1*H*-pyrazole-5-carboxamide; and optionally (f) from about 0.1 % to about 10% of one or more additional formulating ingredients,
wherein the composition comprises not more than about 5% by weight of water-immiscible liquid compounds..

Of note is an insecticidal suspension concentrate composition consisting essentially of by weight based on the total weight of the composition:
(a) from about 0.3 to about 30% of 3-bromo-1-(3-chloro-2-pyridinyl)-*N*-[4-cyano-2-methyl-6-[(methylamino)carbonyl]phenyl]-1*H*-pyrazole-5-carboxamide;
(b) from about 5 to about 70% of a nonionic ethylene oxide-propylene oxide block copolymer component having a water solubility of at least about 5% by weight at 20°C, a hydrophilic-lipophilic balance value ranging from about 5 to about 18 and an average molecular weight ranging from about 900 to about 20000 daltons;
(c) from about 20 to about 95% of water;
(d) from 0 to about 10% by weight of an additional surfactant component;
(e) from 0 to about 25% of one or more biologically active agents other than 3-bromo-1-(3-chloro-2-pyridinyl)-*N*-[4-cyano-2-methyl-6-[(methylamino)carbonyl]phenyl]-1*H*-pyrazole-5-carboxamide; and
(f) from 0 to about 10% of one or more additional formulating ingredients,.
wherein the composition comprises not more than about 5% by weight of water-immiscible liquid compounds.

The above described Embodiments, other embodiments described herein and their combinations also relate to this insecticidal suspension concentrate composition described as "consisting essentially of" the stated ingredients. An example of this composition more particularly described using combinations of the above described Embodiments is an insecticidal suspension concentrate composition consisting essentially by weight from about 5 to about 15% of 3-bromo-1-(3-chloro-2-pyridinyl)-*N*-[4-cyano-2-methyl-6-[(methyl-amino)carbonyl]phenyl]-1*H*-pyrazole-5-carboxamide (as component (a)); from about 20 to about 60% of a nonionic EO/PO block copolymer component having a water solubility of at least about 5% by weight at 20 °C, an HLB value ranging from about 5 to about 17 and an average molecular weight ranging from about 2000 to about 10000 daltons (as component (b)); from about 30 to about 50% of water (as component (c)); and from about 0.1 to about 6% by weight of an additional surfactant component (as component (d)); and from 0 to about 10% of one or more additional formulating ingredients (as component (f)),
wherein the composition comprises not more than about 5% by weight of water-immiscible liquid compounds.

As described in the Summary of the Invention, the present invention is directed to an insecticidal suspension concentrate composition comprising by weight
(a) from about 0.3 to about 30% of 3-bromo-1-(3-chloro-2-pyridinyl)-*N*-[4-cyano-2-methyl-6-[(methylamino)carbonyi]phenyl]-1*H*-pyrazole-5-carboxamide;
(b) from about 5 to about 70% of a nonionic ethylene oxide-propylene oxide block copolymer component having a water solubility of at least about 5% at 20 °C, a hydrophilic-lipophilic balance value ranging from about 5 to about 18 and an average molecular weight ranging from about 900 to about 20000 daltons; and
(c) from about 20 to about 95% of water, .
wherein the composition comprises not more than about 5% by weight of water-immiscible liquid compounds.
Component (c) forms an aqueous medium which provides a continuous liquid phase that serves as a carrier in which the other components in the composition (e.g., components (a) and (b)) are dissolved or dispersed. As will be described further, the active ingredient component (a) is mostly suspended as solid particles in the present composition, and accordingly the composition can be regarded as an aqueous suspension concentrate formulation.

The present composition contains as component (a) the chemical compound 3-bromo-1-(3-chloro-2-pyridinyl)-*N*-[4-cyano-2-methyl-6-[(methylamino)carbonyl]phenyl]-1*H-*pyrazole-5-carboxamide, which is the essential insecticidal active ingredient in the composition. The composition may optionally comprise additional biologically active ingredients. 3-Bromo-1-(3-chloro-2-pyridinyl)-*N*-[4-cyano-2-methyl-6-[(methylamino)-carbonyl]phenyl]-1*H*-pyrazole-5-carboxamide is also known by its provisionally approved common name cyantraniliprole and its tradename Cyazypyr™. The molecular structure of cyantraniliprole is shown as Formula 1.

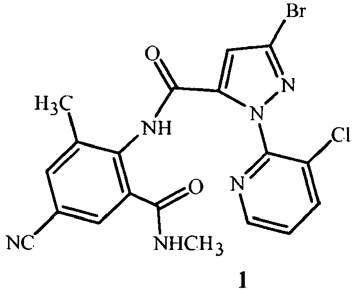

Methods for preparing the compound of Formula **1** are disclosed in U.S. Patent 7247647 and PCT publications WO 2006/062978 and WO 2008/069990. As disclosed in Example 15 of WO 2006/062978, 3-bromo-1-(3-chloro-2-pyridinyl)-*N*-[4-cyano-2-methyl-6-[(methylamino)carbonyl]phenyl]-1*H*-pyrazole-5-carboxamide is in the form of solids melting at 177-181 or 217-219 °C, i.e. two different polymorphs. Both polymorphs are suitable for the present composition.

Most generally, component (a) is from about 0.3 to about 30% of the composition by weight. Typically component (a) is at least about 1%, more typically at least about 2%, and most typically at least 5% of the composition by weight. Component (a) is typically not more than about 20% and more typically not more than about 15% of the composition by weight. Because 3-bromo-1-(3-chloro-2-pyridinyl)-*N*-[4-cyano-2-methyl-6-[(methyl-amino)carbonyl]phenyl]-1*H*-pyrazole-5-carboxamide is only slightly soluble in water, component (a) is mostly present in the present composition as solid particles suspended rather than dissolved in the aqueous liquid phase. Typically at least about 90%, more typically at least about 95%, and most typically at least about 98% of component (a) is present as solid particles instead of being dissolved.

In suspension concentrate formulations, active ingredients are in the form of small, finely distributed particles to facilitate their suspension. Besides facilitating suspensibility, decreasing particle size facilitates uniform coverage and enhances biological availability of the active ingredient. In the present composition, typically more than 95% by weight of the particles of component (a) are milled below a particle size of 10 µm, and the median particle size is in the range between about 4 µm and 0.4 µm. Preferably the median particle size is less than about 3 µm and more preferably less than about 2 µm. A composition wherein the median particle size of component (a) is about 1 µm can be prepared by milling techniques subsequently described in this disclosure.

The present composition contains as component (b) a nonionic ethylene oxide-propylene oxide (EO/PO) block copolymer component having a water solubility of at least about 5% at 20 °C, a hydrophilic-lipophilic balance (HLB) value ranging from about 5 to about 18 and an average molecular weight ranging from about 900 to about 20000 daltons. This nonionic EO/PO block copolymer component consists essentially of one or more nonionic ethylene oxide-propylene oxide block copolymers. The inclusion in the composition of the present invention of a nonionic EO/PO block copolymer having the above described water solubility, HLB value and average molecular weight has been discovered to remarkably promote foliar absorption of the component (a) active ingredient to control piercing-sucking insect pests while minimizing risk of phytotoxicity.

Nonionic ethylene oxide-propylene oxide (EO/PO) block copolymers are polymers comprising one or more chains consisting essentially of oxyethylene units (-OCH₂CH₂) units and one or more chains consisting essentially of oxypropylene units (-OCH(CH₃)CH₂). More particularly in the context of the present disclosure and claims, the molecules of nonionic EO/PO block copolymers are considered to consist essentially of polyoxyethylene and polyoxypropylene chains, except that the chains can be connected and/or terminated by other nonionic molecular units, each containing not more than 4 atoms, not counting hydrogen. As the EO/PO block copolymers of component (b) are nonionic, they do not comprise an anionic moiety or a moiety capable of becoming anionic through dissociation (e.g., a carboxylic acid, sulfonic acid, sulfuric acid, phosphonic acid or phosphoric acid functional group, or a salt of one of these acid functional groups). Also, the nonionic EO/PO block copolymers of component (b) do not comprise cationic moieties (e.g., quaternary ammonium salts), but the nonionic EO/PO block copolymers may contain primary, secondary or tertiary amine functionality, subject to the limitation that molecular units other than oxyethylene or oxypropylene units do not contain more than 4 atoms, not counting hydrogen. However, amine functionality is not essential to nonionic EO/PO block copolymers of component (b). Therefore of note is component (b) comprising at least one nonionic EO/PO block copolymer excluding amine functionality. Also of note is component (b) excluding nonionic EO/PO block copolymers containing amine functionality.

Polyoxypropylene chains are lipophilic whereas polyoxyethylene chains are hydrophilic. Combination of a polyoxyethylene chain with a polyoxypropylene chain results in an amphiphilic molecular structure providing surfactant properties. The one or more polyoxyethylene chains in these molecules can be described as the hydrophile, and the one or more polyoxypropylene chains in these molecules can be described as the lipophile. The numbers of oxyethylene and oxypropylene units can be selected to achieve the required physical properties (e.g., water solubility, HLB, molecular weight) for this component.

In the present composition, component (b) (i.e. the nonionic EO/PO block copolymer component) must have a water solubility of at least about 5% by weight at 20 °C. Accordingly, component (b) must be soluble in water at 20 °C to the extent of at least about 5% (by weight), which means that a saturated solution or liquid crystalline phase of component (b) in water at 20 °C contains at least about 5% by weight of component (b). (For simplicity, water solubility is accordingly defined in the present disclosure as percent by weight even if "by weight" is not expressly stated.) If component (b) contains multiple nonionic EO/PO block copolymer constituents, typically each constituent has a water solubility of at least about 5% at 20 °C. Most nonionic EO/PO block copolymers suitable for component (b) have significantly greater water solubilities (e.g., greater than 10%) and many are miscible with water (e.g., soluble in water in all proportions). The water solubility of present component (b) is believed to reduce the risk of phytotoxicity compared to oils and other water-immiscible liquids that can be used to promote foliar absorption of cyantraniliprole (i.e. component (a)). In the context of the present disclosure and claims, the terms "water-immiscible liquids" and "water-immiscible liquid compounds" refer to liquids and liquid compounds having water solubility at 20 °C of less than about 2% by weight.

In the context of the present invention, "water solubility" means that component (b) is capable of being completely dissolved in pure water (i.e. the mixtures consist only of water and component (b)) in the weight percentage amount indicated to form (1) a solution consisting of separate EO/PO block copolymer molecules (commonly referred to as unimers) dispersed in the water phase, and/or EO/PO block copolymer molecules aggregated into clusters with hydrophilic components of the molecules forming the exterior and hydrophobic components forming the interior of the clusters (i.e. micelles) randomly dispersed in the water phase, and/or (2) a lyotropic liquid crystalline phase containing clusters of EO/PO block copolymer molecules aggregated so that hydrophilic components of the molecules form the cluster exterior and hydrophobic components form the cluster interior wherein the clusters are isotropically or anisotropically ordered relative to one another in regards to position and/or orientation in the presence of water. Liquid crystalline phases are often viscous or even gel-like, but nevertheless clear. Anisotropic liquid crystalline phases are generally birefringent, whereas isotropic liquid crystalline phases are not. Liquid crystalline phases of certain EO/PO block copolymers are described in P. Alexandridis et al., Langmuir 1996, 12, 2690-2700 and P. Alexandridis, Macromolecules 1998, 31, 6935-6942. Although a dispersion of micelles in an aqueous medium is a manifestation of water solubility, dispersions and emulsions of droplets (such as of oils and other water-immiscible liquids) lacking both the exterior and interior order of micelles are not examples of water solubility. Microemulsions of droplets differing from micelles by having interiors consisting of constituents besides the hydrophobic components of EO/PO block copolymer molecules are not examples of solutions or water solubility according to the present definition. For further reference to solubility of EO/PO block copolymers, see Section 4.1 "Surfactant Solubility" in Drew Myers, Surfactant Science and Technology, Third Edition, John Wiley, 2005.

The aggregation state of the nonionic EO/PO block copolymer component (i.e. component (b)) in the present suspension concentrate composition depends on such parameters as ingredients, concentration, temperature and ionic strength. The present composition comprises suspended particles of component (a) having large surface areas relative to their volumes. Nonionic EO/PO block copolymer molecules are generally adsorbed to such interfaces (e.g., as monolayers, bilayers or hemimicelles) in preference to remaining in solution, and only when the interfaces are saturated do high concentrations of the molecules remain in the aqueous phase. Therefore the presence of particles of component (a) allows the present composition to accommodate more component (b) without forming a separate component (b) phase than would be expected based solely on water solubility. If the present suspension composition contains component (b) in excess of both its adsorption onto component (a) particles and its solubility in the aqueous carrier phase, a portion of component (b) will be present in a discrete phase, either as solid particles or as liquid droplets depending upon the physical properties (e.g., melting point) of component (b). However, because the water solubility of component (b) is at least about 5% at 20 °C, the excess component (b) will dissolve when the suspension concentrate composition is diluted with water before application.

The inclusion of polyoxyethylene and polyoxypropylene chains provides nonionic EO/PO block copolymer molecules with an amphiphilic combination of well-defined hydrophilic and lipophilic regions, thereby resulting in ability to function as a surfactant. The hydrophilic-lipophilic balance (HLB) of a surfactant is an overall measure of the degree to which it is hydrophilic or lipophilic, and is determined by the ratio of polar and non-polar groups in the surfactant molecule. The HLB value (i.e. number) of a surfactant indicates the polarity of the surfactant molecules in an arbitrary range of 1 to 40, wherein the number increases with increasing hydrophilicity. The HLB value for a surfactant can be determined by the "emulsion comparison method" of Griffin (W. C. Griffin, J. Soc. Cosmet. Chem. 1949, 1, 311-326). Alternatively, the HLB value can be estimated numerically or predicted by a variety of experimental techniques; see X. Guo et al., Journal of Colloid and Interface Science 2006, 298, 441-450; G. Ben-Et and D. Tatarsky, Journal of the American Oil Chemists' Society 1972, 49(8), 499-500; G. Trapani et al., International Journal of Pharmaceutics 1995, 116, 95-99; and the references cited therein. Lists of surfactants and their respective HLB values have been published widely, for example in A. W. Adamson, Physical Chemistry of Surfaces, John Wiley and Sons, 1982.

The nonionic EO/PO block copolymer component (i.e. component (b)) of the present composition has an HLB value in the range of about 5 to about 18. An HLB value up to about 18 for the nonionic EO/PO block copolymer component is now discovered to be critical for promoting foliar absorption of the component (a) active ingredient to control piercing-sucking insect pests. Although nonionic EO/PO block copolymer components having HLB values less than about 5 can promote foliar absorption of the component (a) active ingredient, their water solubility is typically limited and can be less than 5% at 20 °C. Nonionic EO/PO block copolymers having a HLB value of at least about 5 generally have water solubilities at 20 °C of at least 5%, often greater than 10%. Furthermore, for optimal insect pest control efficacy, the HLB value is typically at least about 6, more typically at least about 7, and most typically at least about 8. Typically for optimal insect pest control efficacy, the HLB value is not more than about 17, more typically not more than about 16, and most typically not more than about 15. Therefore most typically the HLB value of component (b) is in the range of about 8 to about 15, which provides remarkable control of piercing-sucking insect pests (e.g., by promoting foliar absorption of the component (a) active ingredient).

The HLB value desired for the nonionic EO/PO block copolymer component can be achieved by mixing in the proper ratio two or more nonionic EO/PO block copolymers having HLB values above and below the desired HLB value. The HLB value for a combination of surfactants is generally close to the value calculated based on HLB contributions of the constituent surfactants according to their weight percentages. Typically the HLB value of each nonionic EO/PO block copolymer constituent in a mixture of nonionic EO/PO block copolymers forming component (b) is in the range from about 5 to about 18. More typically the HLB value of each nonionic EO/PO block copolymer constituent is at least about 6 or 7, and most typically at least about 8. Also more typically, the HLB value of each nonionic EO/PO block copolymer constituent is not more than about 17 or 16, and most typically not more than about 15.

Besides an HLB value in the range from about 5 to about 18, an average molecular weight in the range of about 900 to about 20000 daltons for the nonionic EO/PO block copolymer component is believed to be important for promoting foliar absorption of the component (a) active ingredient. In the present disclosure and claims, average molecular weight of the nonionic EO/PO block copolymer component is the number average, which corresponds (for a given weight of the component) to multiplying the number of nonionic EO/PO block copolymer molecules of each molecular weight by their molecular weight, then adding the multiplication products, and finally dividing the calculated sum by the total number of nonionic EO/PO block copolymer molecules. However, other definitions of average molecular weight typically give values of similar order of magnitude. The average molecular weight of nonionic EO/PO block copolymers can be measured by methods known in the art, such as gel permeation chromatography cited by Nelson and Cosgrove, Langmuir 2005, 21, 9176-9182. Furthermore, manufacturers of nonionic EO/PO block copolymer products generally disclose average molecular weight information, which can conveniently be used to select appropriate nonionic EO/PO block copolymers for component (b) of the present composition.

The average molecular weight of component (b) is generally at least about 900 daltons, because this is about the minimum molecular size for a nonionic EO/PO block copolymer to function as a surfactant with an HLB value of at least about 5. More typically the average molecular weight of component (b) is at least about 1000 daltons, most typically at least about 2000 daltons. The average molecular weight of component (b) is generally not more than about 20000 daltons, because higher average molecular weight can reduce the promotion of foliar absorption of the component (a) active ingredient even if the HLB value is favorable. For optimal efficiency, the average molecular weight is typically not more than about 15000 daltons or even 10000 daltons. More typically the average molecular weight is not greater that about 8000 daltons, and most typically not greater than about 7000 daltons.

Typically the molecules forming the nonionic EO/PO block copolymer component (i.e. component (b)) do not all have the same molecular weight, but instead molecular weights of the molecules form a distribution (e.g., normal Gaussian). Generally chemical synthesis processes to prepare nonionic EO/PO block copolymers give unimodal distributions of molecular weights. However, component (b) of the present composition can comprise nonionic EO/PO block copolymers prepared in different process batches from differing amounts of ethylene oxide and propylene oxide. Therefore the molecular weight distribution of component (b) can be bimodal or even multimodal. An average molecular weight of about 20000 daltons for EO/PO block copolymer molecules accommodates some molecules having considerably higher molecular weights. Typically at least about 90%, more typically at least about 95% and most typically at least about 98% of the nonionic EO/PO block copolymer molecules forming component (b) have molecular weights not exceeding about 40000 daltons.

Most generally, component (b) is from about 5 to about 70% of the composition by weight. Typically component (b) is at least about 10%, more typically at least about 15%, and most typically at least 20% of the composition by weight. Component (b) is typically not more than about 60% and more typically not more than about 50% of the composition by weight.

Generally, increasing the weight ratio of component (b) to component (a) increases the foliage penetration and therefore efficacy of component (a) for controlling piercing-sucking insect pests feeding on the foliage. However, increasing component (b) reduces the amount of component (a) that can be included in the present insecticidal suspension concentrate composition. Typically the weight ratio of component (b) to component (a) is at least about 1 : 1, more typically at least about 2 : 1, and most typically at least about 4 : 1 or even about 8 : 1. Typically the weight ratio of component (b) to component (a) is not more than about 20 : 1 , and more typically not more than about 15 : 1.

Nonionic ethylene oxide-propylene oxide block copolymers include poloxamers, reverse poloxamers, poloxamines and reverse poloxamines. In poloxamers and poloxamines, the central portion of the molecule comprises one or more polyoxypropylene chains to render it lipophilic, and to the central portion are bonded at least two polyoxyethylene chains to provide the hydrophile. In poloxamers and poloxamines, the polyoxyethylene chains are terminated by primary hydroxyl groups. In reverse poloxamers and reverse poloxamines, the central portion of the molecules comprises one or more polyoxyethylene chains to provide the hydrophile, and to the central portion are bonded at least two polyoxypropylene chains to provide the lipophile. In reverse poloxamers and reverse poloxamines the polyoxypropylene chains are terminated by secondary hydroxyl groups.

For poloxamers and poloxamines used in component (b), the total molecular weight of the peripheral hydrophile (i.e., combination of polyoxyethylene chains) is typically in the range of about 10% to about 50% of the weight of the molecule. However, only at the lowest average total molecular weight (i.e., near 1,000 daltons) is 10 weight % of hydrophile sufficient to ensure water solubility of at least about 5% at 20 °C. Therefore, more typically the total molecular weight of the hydrophile is at least about 20% of the weight of the molecule. Also more typically the total molecular weight of the hydrophile is not more than about 40% of the weight of the molecule.

For reverse poloxamers and reverse poloxamines used in component (b), the total molecular weight of the central hydrophile (i.e., polyoxyethylene chain or chains) is typically in the range of about 20% to about 80% of the weight of the molecule. However, with medium to high average total molecular weights (i.e., above about 2300 daltons) at least about 30% by weight of hydrophile is used to ensure water solubility of at least about 5% at 20 °C. Also, when the average molecular weight of the lipophile is low (i.e. below about 1500 daltons), the total molecular weight of the central hydrophile is typically not more than about 60% by weight of the molecule, so the HLB value does not exceed 18.

Poloxamers are of particular note, because poloxamers having HLB values in the range from about 5 to about 18, and particularly in the range of about 8 to about 15, have been discovered to be remarkably effective in the present composition for promoting foliar absorption of the component (a) active ingredient to control piercing-sucking insect pests.

The term "poloxamer" refers to a nonionic tri-block copolymer consisting of a central polyoxypropylene chain as lipophile connected at each end to polyoxyethylene chains providing the hydrophile. Poloxamers correspond to Formula **2** as shown.

HO(C₂H₄O)ₘ-(C₃H₆O)ₙ-(C₃H₄O)ₚ-H **2**

wherein m, n and p are numeric variables consistent with polymers. Suitable values of m, n and p can be easily calculated for desired total molecular weight and percent hydrophile based on the molecular weights of the subunits derived from ethylene oxide or propylene oxide.

The physical consistency of poloxamers in their pure form ranges from liquids to pastes to solids (typically described as flakes) at 20 °C. Poloxamers having an HLB value of at least about 20 (or 22 when their molecular weight is less than about 3000 daltons) are typically solids at 20 °C, while poloxamers having lower HLB values are typically liquids or pastes depending upon both HLB value and molecular weight (lower HLB and lower molecular weight favoring liquids versus pastes). As component (b) in the present composition is specified to have an HLB value not exceeding about 18, poloxamers forming component (b) are typically liquids or pastes in their pure form.

Lundsted U.S. Patent 2,674,619 describes the preparation of poloxamers by sequential addition of propylene oxide and then ethylene oxide to propylene glycol. Because poloxamers are the products of a sequential series of reactions, the molecular weights of individual poloxamer molecules are statistical distributions about the average molecular weight. Nelson and Cosgove, Langmuir 2005, 21, 9176-9182 reports that some commercial poloxamer products are bimodal and may contain di-block PEO-PPO (i.e. polyoxyethylene-polyoxypropylene) as an impurity.

Poloxamers are available from commercial suppliers such as BASF, which markets them under the "PLURONIC" tradename, and Croda, which markets them under the "SYNPERONIC" tradename.

As described in the "Poloxamer" article in Wikipedia (as of July 8, 2009, http://en.wikipedia.org/wiki/Poloxamer), following the PLURONIC tradename, product coding starts with a letter describing its physical form at room temperature ("L" means liquid, "P" means paste, "F" means flake (solid)) followed by two or three digits. The first (left) digit (or two digits in a three-digit number) in the numerical designation multiplied by 300 indicates the approximate molecular weight of the polyoxypropylene chain, and the last digit multiplied by 10 gives the weight percentage polyoxyethylene content (e.g., L64 denotes a poloxamer having a polyoxypropylene molecular mass of about 1800 daltons and a 40% polyoxyethylene content). A counterpart system of nomenclature has been publicized for the generic term "poloxamer" consisting of the letter "P" (for poloxamer) followed by three digits, the product of the first two digits multiplied by 100 gives the approximate molecular mass of the polyoxypropylene core, and the last digit multiplied by 10 gives the percentage polyoxyethylene content (e.g., P184 denotes a poloxamer with a polyoxypropylene molecular mass of about 1800 daltons and a 40% polyoxyethylene content, which is thus the same as PLURONIC L64). Nominal molecular weights and polyoxyethylene to polyoxypropylene ratios may vary among manufacturing lots and among suppliers.

Poloxamers useful as nonionic ethylene oxide-propylene oxide block copolymers in component (b) of the present composition typically have a central polyoxypropylene chain with an average molecular weight of at least about 800 daltons, which corresponds to the average value for the subscript variable "n" in Formula **2** being at least about 14. More typically the average molecular weight of the central polyoxypropylene chain is at least about 900 daltons, which corresponds to the average value for the subscript variable "n" in Formula **2** being at least about 15. Most typically the average molecular weight of the central polyoxypropylene chain is at least about 1200 daltons. Typically the average molecular weight of the central polyoxypropylene chain does not exceed about 9000 daltons (i.e. "n" in Formula **2** is not more than about 150). Lower molecular weights of poloxamers facilitate including greater ratios of component (b) to component (c) (i.e. water) while maintaining a free-flowing liquid consistency for the present composition. Therefore more typically the average molecular weight of the central polyoxypropylene chain is not greater than about 4000 daltons, about 3000 daltons, or even about 2000 daltons.

In poloxamer molecules, the combination of the two polyoxyethylene chains (i.e. (C₂H₄O)ₘ₊ₚ, with reference to Formula **2**) provides the hydrophile. Typically the sum of subscript variables "m" and "p" in Formula **2** is in the range of about 2 to about 110, with the higher sum values in this range corresponding with higher values of the subscript variable "n", so that the polyoxyethylene content does not exceed about 50% by weight, and the lower sum values in this range corresponding with lower values of the subscript variable "n", so that the polyoxyethylene content is at least about 10% by weight, more typically at least about 20% by weight. More typically the sum of subscript variables "m" and "p" is at least about 6, most typically at least about 10.

The physical properties of poloxamers are well known. Guo et at., Journal of Colloid and Interface Science 2006, 298, 441-450 lists average molecular weights and HLB values for PLURONIC poloxamers, and also discloses a general method for calculating HLB values of poloxamers. Examples of poloxamers suitable for component (b) of the present composition include PLURONIC L31, L42, L43, L44, L62, L63, L64, P65, L72, P75, P84, P85, L92, P103, P104, P105 and P123. Of particular note are PLURONIC L64, P103 and P104.

The term "reverse poloxamer" refers to a nonionic tri-block copolymer consisting of a central polyoxyethylene chain as hydrophile connected at each end to polyoxypropylene chains providing the lipophile. Reverse poloxamers correspond to Formula 3 as shown.

HO(C₃H)_{q}-(C₂H₄O)ᵣ-(C₃H₆O)ₛ-H **3**

wherein q, r and s are numeric variables consistent with polymers. Suitable values of q, r and s can be easily calculated for desired total molecular weight and percent hydrophile based on the molecular weights of the subunits derived from ethylene oxide or propylene oxide.

The process of Lundsted U.S. Patent 2,674,619 for preparing poloxamers can be adapted to prepare reverse poloxamers by starting with ethylene glycol instead of propylene glycol and interchanging the order of addition of ethylene oxide and propylene oxide. Reverse poloxamers are available from commercial suppliers such as BASF, which markets them under the "PLURONIC" tradename with the letter "R" inserted between the left two digits indicating (when multiplied by 100) the molecular weight of the polyoxypropylene lipophile and the right-hand digit indicating (when multiplied by 10) the weight percentage content of polyoxyethylene as hydrophile. PLURONIC product codes for reverse poloxamers omit the left-hand "L", "P" and "F" designations of physical form.

The physical properties of reverse poloxamers are well known. Guo et al., Journal of Colloid and Interface Science 2006, 298, 441-450 lists average molecular weights and HLB values for PLURONIC reverse poloxamers, and also discloses a general method for calculating HLB values of reverse poloxamers. Examples of reverse poloxamers suitable for component (b) of the present composition include PLURONIC 10R5, 12R3, 17R2, 17R4, 17R8, 22R4, 25R4, 25R5, 25R8 and 31R4.

Poloxamines are structurally related to poloxamers, but as shown in Formula **4** have four chains tethered to a 1,2-diaminoethane moiety. 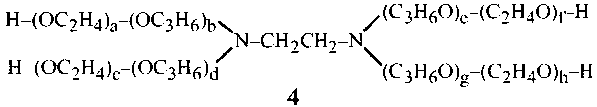 wherein a, b, c, d, e, f, g and h are numeric variables consistent with polymers. Suitable values of a, b, c, d, e, f, g and h can be easily calculated for desired total molecular weight and percent hydrophile based on the molecular weights of the subunits derived from ethylene oxide or propylene oxide.

Whereas poloxamers are prepared by sequential addition of propylene oxide then ethylene oxide to propylene glycol, poloxamines are prepared by sequential addition of propylene oxide then ethylene oxide to ethylenediamine. Poloxamines are commercially available from BASF, which markets them under the "TETRONIC" tradename. The right-hand digit of the TETRONIC number multiplied by 10 indicates the weight percentage content of polyoxyethylene as hydrophile.

The physical properties of poloxamines are well known. Guo et al., Journal of colloid and Interface Science 2006, 298, 441-450 provides parameters and a method applicable to calculating HLB values for poloxamines. Examples of poloxamines suitable for component (b) of the present composition include TETRONIC 304 and 904. Of particular note is TETRONIC 304. U.S. Patent Application Publication US 2003/0073583 discloses TETRONIC 304 has an average molecular weight of 1650 daltons, a hydrophile content of 40% and an HLB value of 16.

Reverse poloxamines are structurally related to poloxamines but as shown in Formula **5** interchange the polyoxyethylene and polyoxypropylene chains tethered to the 1,2-diaminoethane moiety. 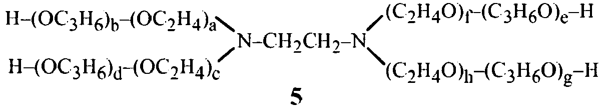 wherein a, b, c, d, e, f, g and h are numeric variables consistent with polymers. Suitable values of a, b, c, d, e, f, g and h can be easily calculated for desired total molecular weight and percent hydrophile based on the molecular weights of the subunits derived from ethylene oxide or propylene oxide.

Whereas poloxamines are prepared by sequential addition of propylene oxide then ethylene oxide to ethylenediamine, reverse poloxamines are prepared by sequential addition of ethylene oxide then propylene oxide to ethylenediamine. Reverse poloxamines are commercially available from BASF, which markets them under the "TETRONIC" tradename with the letter "R" inserted before the right-hand digit indicating (when multiplied by 10) the weight percentage content of polyoxyethylene as hydrophile.

The physical properties of reverse poloxamines are well known. Guo et al., Journal of Colloid and Interface Science 2006, 298, 441-450 provides parameters and a method applicable to calculating HLB values for reverse poloxamines. TETRONIC 90R4 is an example of a reverse poloxamine suitable for component (b) of the present composition. U.S. Patent Application Publication US 2003/0073583 discloses that TETRONIC 90R4 has an average molecular weight of 7240 daltons, a hydrophile content of 40% and an HLB value of 7.

In the present suspension concentration composition, component (b) is particularly noteworthy for promoting foliar absorption and penetration of the component (a) active ingredient to facilitate control of sucking insect pests. However, the nonionic EO/PO block copolymers forming component (b) are well known for their wetting and dispersing properties for which they are generally included in formulations at concentrations substantially less than specified for the present composition, which requires much larger amounts to promote foliar absorption of component (a). Accordingly, besides promoting foliar absorption and penetration of component (a), component (b) also acts as a dispersant to keep particles of component (a) from agglomerating in the present suspension concentrate composition and in the diluted aqueous composition formed by adding water before application (e.g., spraying).

In the present suspension concentrate composition, water as component (c) forms the continuous liquid phase in which other components are dissolved or suspended. Generally the amount of water is in the range of about 20 to about 95% of the composition by weight. Particularly when component (b) contains medium to high molecular weight (i.e. greater than about 4000 daltons) EO/PO block copolymers, the amount of water is typically at least about 25%, more typically at least about 30%, and most typically at least about 35% or even 40% of the composition by weight to reduce viscosity. Although the composition of the present invention performs well with high concentrations of water, to accommodate substantial amounts of components (a) and (b) in the suspension concentrate, the amount of water is typically not more than about 80%, more typically not more than about 70% or 60%, and most typically not more than about 55% or even 50% of the composition by weight.

In addition to the nonionic EO/PO block copolymer component (b), which has surfactant properties, the present composition can optionally further comprise up to 10% by weight of additional surfactant component (d) consisting essentially of one or more surfactants other than nonionic EO/PO block copolymers. If present, additional surfactant component (d) is typically at least about 0.01% or about 0.1%, more typically at least about 1%, and most typically at least about 2% of the composition by weight. Additional surfactant component (d) is typically not more than about 8%, more typically not more than about 6%, and most typically not more than about 4% of the composition by weight. Additional surfactant component (d) provides one or more useful properties, such as promoting wetting, dispersing or emulsification, or reducing foaming of the present composition or the diluted aqueous composition formed by extending the present composition with water before applying (e.g., as a foliar spray).

As is generally understood in the art, the term "surfactant" is etymologically derived from term "surface acting agent", because surfactant compounds modify (typically reduce) interfacial free energy, e.g., surface tension of water at a water-gas interface or the interfacial tension between water and a water-immiscible liquid at the liquid-liquid interface. Surfactants are usually organic compounds that are amphiphilic, which means their molecules contain well-defined hydrophobic (i.e. lipophilic) and hydrophilic components.

Surfactants are described as nonionic, anionic or cationic surfactants based on the chemical nature of their hydrophilic components. The molecules of a nonionic surfactant compound do not contain polar groups that are ionic (i.e. anionic or cationic), but nevertheless the molecules contain hydrophilic as well as lipophilic portions. In particular, if a surfactant molecule contains a carboxylic acid, sulfonic acid, sulfuric acid, phosphonic acid or phosphoric acid functional group or a salt of one of these acid functional groups, the surfactant is generally considered to be an anionic surfactant even if the molecule also contains a nonionic hydrophilic component. Although primary, secondary and tertiary amines are protonated in equilibrium to a minor extent on contact with pure water, surfactants containing amine functionality but no anionic groups in their molecules are often regarded as nonionic surfactants instead of cationic surfactants. In the present context, the definition of nonionic surfactant does not preclude amine functionality in the molecular structure of the surfactant. However, a surfactant molecule containing a nitrogen atom having four bonds to atoms other than hydrogen and a formal positive charge, such as quaternary ammonium salts and heteroaromatic rings in which an sp²-hybridized nitrogen atom in the ring is bonded to an exocyclic atom other than hydrogen (e.g., N-substituted pyridinium or imidazolium), is considered to be a cationic surfactant even if the molecule contains a nonionic hydrophilic component.

Typical surfactants are described in McCutcheon's Detergents and Emulsifiers Annual, Allured Publ. Corp., Ridgewood, New Jersey, as well as Sisely and Wood, Encyclopedia of Surface Active Agents, Chemical Publ. Co., Inc., New York, 1964.

Also as already mentioned, a nonionic surfactant contains surface-active molecules that do not contain an ionic group, but nevertheless do contain a well-defined hydrophilic component as well as a lipophilic component. Many of the chemical classes of nonionic surfactants have at least one chain comprising one or more oxyethylene units (-OCH₂CH₂-) to provide the hydrophile in their molecules, and thus these nonionic surfactants are known as ethoxylated nonionic surfactants. The nonionic EO/PO block copolymers of present component (b) is one class of ethoxylated nonionic surfactants, but many other classes of ethoxylated nonionic surfactants are available and can be used to form present component (d). Examples of other classes of ethoxylated nonionic surfactants include ethoxylated alcohols, ethoxylated alkylphenols, ethoxylated sorbitan fatty acid esters, ethoxylated sorbitol fatty acid esters and ethoxylated fatty acid esters. These are typically prepared by reaction of ethylene oxide with hydroxyl groups of alcohols, phenols, sorbitan, sorbitol or fatty acid components, respectively. In molecules of ethoxylated sorbitan esters and ethoxylated sorbitol esters, generally at least one of the hydroxyl groups present after cthoxylation is esterified, typically with a fatty acid. If more than one oxyethylene unit is generally present on each surfactant molecule, "polyoxyethylene" can be included in the surfactant name, or alternatively a POE (polyoxyethylene) number can be included in the name to indicate the average number of oxyethylene units per molecule.

Other chemical classes of nonionic surfactants that can be used to form present component (d) include glycerol esters and alkylpolyglycosides where the number of glucose units, referred to as degree of polymerization, can range from 1 to 3 and the alkyl units can range from C₆ to C₁₄ (see K. Hill, Pure and Applied Chemistry 2000, 72, 1255-1264).

Component (d) can also comprise anionic surfactants. As already mentioned, the amphiphilic molecules of an anionic surfactant contain a carboxylic acid, sulfonic acid, sulfuric acid, phosphonic acid or phosphoric acid functional group or a salt of one of these acid functional groups. Examples of anionic surfactants include sodium alkylnaphthalene sulfonates, naphthalenesulfonate formaldehyde condensates, alkylbenzenesulfonates, lignin sulfonates, alkyl sulfates, alkyl ether sulfates, dialkylsulfosuccinates, *N,N-*dialkyltaurates, polycarboxylates, phosphate ester salts, ethoxylated tristyrylphenol phosphate salts and alkali salts of fatty acids. Anionic surfactants can also include polyoxyethylene chains in their molecular structures such as sodium lauryl ether sulfate and ATLOX 4912 (a block copolymer of hydroxystearic acid and polyoxyethylene).

Component (d) can also comprise cationic surfactants. As already mentioned, the amphiphilic molecules of a cationic surfactant contain a nitrogen atom in a quaternary ammonium (e.g., benzyltrimethylammonium salts) or other quaternary-type function (e.g., N-substituted pyridinium or imidazolium salts).

In a suspension concentrate composition, when solids in the particulate phase come close to each other and their mutual attraction overcomes repulsive forces, recombination can occur and the particles can stick together either by flocculation or by agglomeration. Dispersing agents, called dispersants, can be absorbed on the particle surface to create either an electrostatic and/or steric barrier between particles, thus reducing particle-to-particle interaction and stabilizing the suspension.

As already noted, the nonionic EO/PO block copolymers of component (b) have dispersant properties. Because they are included in the present composition in large amount to promote foliar absorption and penetration of component (a), component (d) typically does not need to include an additional dispersant to prevent agglomeration of particles of component (a). Nevertheless, one or more additional dispersants can be included in component (d). Including a dispersant in component (d) can be particularly advantageous when an aqueous slurry containing component (a) is milled before adding component (b) to complete the present suspension concentrate composition.

Examples of dispersing agents useful in component (d) include anionic surfactants such as phosphate esters of tristyrylphenol ethoxylates (e.g., SOPROPHOR 3D33), alkylarylsulfonic acids and their salts (e.g., SUPRAGIL MNS90), lignin sulfonates (e.g., ammonium lignosulfonate or sodium lignosulfonate), polyphenol sulfonates, polyacrylic acids, acrylic graft copolymers such as acrylic acid/methyl methacrylate/polyoxyethylene graft copolymers (e.g., ATLOX 4913), and other polymers combining polyoxyalkylene with acid functionality such as ATLOX 4912 (block copolymer of polyoxyethylene and hydroxystearic acid).

The nonionic EO/PO block copolymers of component (b) also typically obviate need to include an additional surfactant as wetting agent in component (d), but one or more additional wetting agents can be included. Examples of wetting agents (some of which overlap with dispersing agents) include alkyl sulfate salts (e.g., SIPON LC 98 (sodium lauryl sulfate)), alkyl ether sulfate salts (e.g., sodium lauryl ether sulfate), alkylarylsulfonates (i.e. salts of alkylarylsulfonic acids, including arylsulfonic acids substituted with more than one alkyl moiety) such as sodium or calcium alkylbenzenesulfonates (e.g., RHODACAL DS1) and alkylnaphthalenesulfonates (e.g., RHODACAL BX-78), α-olefin sulfonate salts, dialkyl sulfosuccinate salts and salts of polycarboxylic acids.

Component (d) can also comprise one or more anti-foaming agents. Anti-foaming agents are surfactants that can effectively either prevent foam formation or reduce or eliminate it once it has formed. Examples of anti-foaming agents include silicone oils, mineral oils, polydialkylsiloxanes such as polydimethylsiloxanes, fatty acids and their salts with polyvalent cations such as calcium, magnesium and aluminum, alkyne diols (e.g., SURFYNOL 104), and fluoroaliphatic esters, perfluoroalkylphosphonic and perfluoroalkylphosphinic acids, and salts thereof. When component (d) comprises one or more anti-foaming agents, they typically amount to at least about 0.01% and not more than about 3% of the composition by weight. More typically, anti-foaming agents are not more than about 2% and most typically not more than about 1% of the composition by weight.

The suspension concentrate composition of the present invention can optionally further comprise as component (e) up to about 25% by weight of one or more biologically active agents other than 3-bromo-1-(3-chloro-2-pyridinyl)-N-[4-cyano-2-methyl-6-[(methylamino)carbonyl]phenyl]-1H-pyrazole-5-carboxamide (i.e. component (a)). Biologically active agents of component (e) do not include biocides whose principal effect is to preserve the present composition rather than protect a plant contacted with the present composition. If present, component (e) is typically at least about 0.1 % and more typically at least about 1% of the composition by weight. Typically component (e) is not more than about 20%, more typically not more than about 15%, and most typically not more than about 10% of the composition by weight. The biologically active agents forming component (e) differ from the component (a) cyantraniliprole insecticide and can include chemical compounds or biological organisms selected from the following classes: insecticides, fungicides, nematocides, bactericides, acaricides, herbicides, growth regulators such as rooting stimulants, chemosterilants, semiochemicals, repellents, attractants, pheromones and feeding stimulants (including both chemical and biological agents, and mixtures of several compounds or organisms selected from the above classes).

Compositions comprising different biologically active agents can have a broader spectrum of activity than a single agent alone. Furthermore, such mixtures can exhibit a synergistic effect. In the present invention, component (e) can exist in one or two phases, i.e. dissolved in the aqueous phase (i.e. the phase formed from component (c)), or as a solid particulate phase or discontinuous liquid phase suspended or dispersed in the aqueous phase. Water-soluble biologically active agents will typically be present (dissolved) predominantly in the aqueous phase, while biologically active agents of low water solubility will typically be dispersed as a solid particulate phase distinct from the solid particulate phase containing component (a) or as emulsion droplets in the continuous aqueous phase. Of note is the composition of the present invention wherein component (e) is dissolved or suspended as solid particles in the continuous aqueous phase.

Examples of component (e) (i.e. the one or more biologically active agents other than cyantraniliprole) are: insecticides such as abamectin, acephate, acetamiprid, acrinathrin, amidoflumet (S-1955), avermectin, azadirachtin, azinphos-methyl, bifenthrin, bifenazate, buprofezin, carbofuran, cartap, chlorantraniliprole, chlorfenapyr, chlorfluazuron, chlorpyrifos, chlorpyrifos-methyl, chromafenozide, clothianidin, cyflumetofen, cyfluthrin, beta-cyfluthrin, cyhalothrin, lambda-cyhalothrin, cypermethrin, cyromazine, deltamethrin, diafenthiuron, diazinon, dieldrin, diflubenzuron, dimefluthrin, dimethoate, dinotefuran, diofenolan, emamectin (including emamectin benzoate), endosulfan, esfenvalerate, ethiprole, fenothiocarb, fenoxycarb, fenpropathrin, fenvalerate, fipronil, flonicamid, flubendiamide, flucythrinate, tau-fluvalinate, flufenerim (UR-50701), flufenoxuron, fonophos, halofenozide, hexaflumuron, hydramethylnon, imidacloprid, indoxacarb, isofenphos, lufenuron, malathion, metaflumizone, metaldehyde, methamidophos, methidathion, methomyl, methoprene, methoxychlor, metofluthrin, milbemycin oxime, monocrotophos, methoxyfenozide, nicotine, nitenpyram, nithiazine, novaluron, noviflumuron (XDE-007), oxamyl, parathion, parathion-methyl, permethrin, phorate, phosalone, phosmet, phosphamidon, pirimicarb, profenofos, profluthrin, pymetrozine, pyrafluprole, pyrethrin, pyridalyl, pyrifluquinazon, pyriprole, pyriproxyfen, rotenone, ryanodine, spinetoram, spinosad, spirodiclofen, spiromesifen (BSN 2060), spirotetramat, sulprofos, tebufenozide, teflubenzuron, tefluthrin, terbufos, tetrachlorvinphos, thiacloprid, thiamethoxam, thiodicarb, thiosultap-sodium, tolfenpyrad, tralomethrin, triazamate, trichlorfon and triflumuron; and biological agents including entomopathogenic bacteria, such as *Bacillus thuringiensis* subsp. *aizawai, Bacillus thuringiensis* subsp. *kurstaki,* and the encapsulated delta-endotoxins of *Bacillus thuringiensis* (e.g., Cellcap, MPV, MPVII); entomopathogenic fungi, such as green muscardine fungus; and entomopathogenic virus including baculovirus, nucleopolyhedro virus (NPV) such as HzNPV and AfNPV, and granulosis virus (GV) such as CpGV; fungicides such as acibenzolar, aldimorph, ametoctradin, amisulbrom, azaconazole, azoxystrobin, benalaxyl, benomyl, benthiavalicarb, benthiavalicarb-isopropyl, binomial, biphenyl, bitertanol, bixafen, blasticidin-S, Bordeaux mixture (tribasic copper sulfate), boscalid/nicobifen, bromuconazole, bupirimate, buthiobate, carboxin, carpropamid, captafol, captan, carbendazim, chloroneb, chlorothalonil, chlozolinate, clotrimazole, copper oxychloride, copper salts such as copper sulfate and copper hydroxide, cyazofamid, cyflunamid, cymoxanil, cyproconazole, cyprodinil, dichlofluanid, diclocymet, diclomezine, dicloran, diethofencarb, difenoconazole, 1-[4-[4-[5-(2,6-difluorophenyl)-4,5-dihydro-3-isoxazolyl]-2-thiazolyl]-1-piperidinyl]-2-[5-methyl-3-(trifluoromethyl)-1*H*-pyrazol-1-yl]ethanone, dimethomorph, dimoxystrobin, diniconazole, diniconazole-M, dinocap, discostrobin, dithianon, dodemorph, dodine, econazole, etaconazole, edifenphos, epoxiconazole, ethaboxam, ethirimol, ethridiazole, famoxadone, fenamidone, fenarimol, fenbuconazole, fencaramid, fenfuram, fenhexamide, fenoxanil, fenpiclonil, fenpropidin, fenpropimorph, fentin acetate, fentin hydroxide, ferbam, ferfurazoate, ferimzone, fluazinam, fludioxonil, flumetover, fluopicolide, fluopyram, fluoxastrobin, fluquinconazole, fluquinconazole, flusilazole, flusulfamide, flutolanil, flutriafol, folpet, fosetyl-aluminum, fuberidazole, furalaxyl, furametapyr, hexaconazole, hymexazole, guazatine, imazalil, imibenconazole, iminoctadine, iodicarb, ipconazole, iprobenfos, iprodione, iprovalicarb, isoconazole, isoprothiolane, isopyrazam, kasugamycin, kresoxim-methyl, mancozeb, mandipropamid, maneb, mapanipyrin, mefenoxam, mepronil, metalaxyl, metconazole, methasulfocarb, metiram, metominostrobin/fenominostrobin, mepanipyrim, metrafenone, miconazole, myclobutanil, neo-asozin (ferric methanearsonate), nuarimol, octhilinone, of urace, orysastrobin, oxadixyl, oxolinic acid, oxpoconazole, oxycarboxin, paclobutrazol, penconazole, pencycuron, penflufen, penthiopyrad, perfurazoate, phosphonic acid, phthalide, picobenzamid, picoxystrobin, polyoxin, probenazole, prochloraz, procymidone, propamocarb, propamocarb-hydrochloride, propiconazole, propineb, proquinazid, prothioconazole, pyraclostrobin, pyrametostrobin, pyraoxystrobin, pyrazophos, pyrifenox, pyrimethanil, pyrifenox, pyrolnitrine, pyroquilon, quinconazole, quinoxyfen, quintozene, sedaxane, silthiofam, simeconazole, spiroxamine, streptomycin, sulfur, tebuconazole, tebufloquin, techrazene, tecloftalam, tecnazene, tetraconazole, thiabendazole, thifluzamide, thiophanate, thlophanate-methyl, thiram, tiadinil, tolclofos-methyl, tolyfluanid, triadimefon, triadimenol, triarimol, triazoxide, tridemorph, trimoprhamide tricyclazole, trifloxystrobin, triforine, triticonazole, uniconazole, validamycin, valifenalate, vinclozolin, zineb, ziram, and zoxamide; nematocides such as aldicarb, imicyafos, oxamyl and fenamiphos; bactericides such as streptomycin; and acaricides such as amitraz, chinomethionat, chlorobenzilate, cyhexatin, dicofol, dienochlor, etoxazole, fenazaquin, fenbutatin oxide, fenpropathrin, fenpyroximate, hexythiazox, propargite, pyridaben and tebufenpyrad.

General references for these agricultural protectants (i.e. insecticides, nematocides, acaricides and biological agents) include The Pesticide Manual, 13th Edition, C. D. S. Tomlin, Ed., British Crop Protection Council, Farnham, Surrey, U.K., 2003 and The BioPesticide Manual, 2nd Edition, L. G. Copping, Ed., British Crop Protection Council, Farnham, Surrey, U.K., 2001.

Of particular note is component (e) selected from abamectin, acetamiprid, acrinathrin, avermectin, azadirachtin, azinphos-methyl, bifenthrin, buprofezin, cartap, chlorfenapyr, chlorpyrifos, clothianidin, cyfluthrin, beta-cyfluthrin, cyhalothrin, lambda-cyhalothrin, cypermethrin, cyromazine, deltamethrin, diafenthiuron, dieldrin, diflubenzuron, dimethoate, dinotefuran, emamectin benzoate, endosulfan, esfenvalerate, ethiprole, fenothiocarb, fenoxycarb, fenvalerate, fipronil, flonicamid, flubendiamide, flufenoxuron, hexaflumuron, hydramethylnon, imidacloprid, indoxacarb, lufenuron, metaflumizone, methomyl, methoxyfenozide, milbemycin oxime, nicotine, nitenpyram, nithiazine, novaluron, oxamyl, pymetrozine, pyrethrin, pyridaben, pyridalyl, pyrifluquinazon, pyriproxyfen, ryanodine, spinetoram, spinosad, spirodiclofen, spiromesifen, spirotetramat, tebufenozide, thiacloprid, thiamethoxam, thiodicarb, thiosultap-sodium, tolfenpyrad, tralomethrin, triazamate, triflumuron, *Bacillus thuringiensis* subsp. *aizawai, Bacillus thuringiensis* subsp. *kurstaki,* nucleopolyhedro virus and an encapsulated delta-endotoxin *of Bacillus thuringiensis.*

Of note is component (e) selected from biologically active agents other than biological organisms (i.e. excluding e.g., viruses, bacteria and fungi).

The suspension concentrate composition of the present invention can optionally further comprise as component (f) up to about 15% by weight of one or more additional formulating ingredients. Examples of possible additional formulating ingredients, alternatively described as auxiliaries, are antifreeze agents, thickening agents, preservatives such as chemical stabilizers or biocides, and fertilizers. If component (f) is present, it typically is in the amount of at least 0.01%, more typically at least 0.1%, of the composition by weight.

When component (f) comprises an antifreeze constituent consisting essentially of one or more antifreeze agents, the amount of the antifreeze constituent is typically up to about 7% of the composition by weight. When an antifreeze constituent is present, it typically amounts to at least about 0.1% of the composition by weight. Typically the antifreeze constituent does not exceed about 5% and more typically about 4% of the total weight of the composition. Of note is the composition of the present invention wherein the weight ratio of the antifreeze constituent to component (c) ranges from 1 : 5 to 1 : 20.

Examples of antifreeze agents include glycols such as ethylene glycol, diethylene glycol, propylene glycol, dipropylene glycol, glycerol, 1,3-propanediol, 1,2-propanediol or polyethylene glycol of molecular weight in the range from about 200 to about 1000 daltons. Antifreeze agents particularly suitable for the composition of the present invention include ethylene glycol, propylene glycol, glycerol, 1,3-propanediol and 1,2-propanediol.

For reasons including commercial availability and cost, of note is the composition of the invention wherein component (f) comprises an antifreeze agent selected from ethylene glycol, propylene glycol, 1,3-propanediol and 1,2-propanediol. Of particular note is the composition of the invention wherein component (f) comprises ethylene glycol or propylene glycol.

Thickening agents (i.e. thickeners) increase viscosity of the continuous liquid medium in which solid particles (e.g., of component (a)) are suspended and thus reduce their propensity to settle. Because component (b) also increases viscosity, including one or more thickening agents in component (f) is generally not necessary and indeed can be unhelpful if the viscosity of the composition is already as much as desired. Including one or more thickening agents in component (f) can be beneficial for slowing settling of particles of component (a) if the composition contains a large amount of component (c) relative to component (b), particularly when component (b) comprises mainly nonionic EO/PO block copolymers of relatively low molecular weight (i.e. less than about 3500 daltons). Examples of thickening agents useful for the present composition include polyols such as glycerol, polysaccharides including heteropolysaccharides such as xanthan gum, and hydrated clays with very small particle sizes (e.g., 2 nm) such as the hydrated magnesium aluminosilicate ACTI-GEL 208 (Active Minerals). Glycerol is of note as having both antifreeze and thickener properties. An extensive list of thickeners and their applications can be found in McCutcheon's 2005, Volume 2: Functional Materials published by MC Publishing Company. If component (f) comprises a thickening agent constituent, the thickening agent constituent is typically at least about 0.1% and not greater than about 5% of the composition by weight.

When component (f) comprises a preservative constituent consisting essentially of one or more stabilizing agents or biocides, the amount of the preservative constituent is typically up to about 1% of the composition by weight. When a preservative constituent is present, it typically amounts to at least about 0.01% of the composition by weight. The preservative constituent does not exceed typically about 1%, more typically about 0.5% and most typically about 0.3% of the total weight of the composition.

Stabilizing agents can prevent decomposition of active ingredients (i.e. component (a) and/or component (e)) during storage, for example, anti-oxidants (such as butylhydroxytoluene) or pH modifiers (such as citric acid or acetic acid). Biocides can prevent or reduce microbial contamination within a formulated composition. Particularly suitable biocides are bactericides such as LEGEND MK (mixture of 5-chloro-2-methyl-3(2*H*)-isothiazolone with 2-methyl-3(2*H*-isothiazolone), EDTA (ethylenediaminetetraacetic acid), formaldehyde, benzoic acid, or 1,2-benzisothiazol-3(2*H*)-one or its salts, e.g., PROXEL BD or PROXEL GXL (Arch). Of note is the present composition wherein component (f) comprises a biocide, in particular, a bactericide such as 1,2-benzisothiazol-3(2*H*)-one or one of its salts.

Component (f) can also comprise one or more fertilizers (i.e. plant nutrients). Fertilizers included in component (f) can provide major plant nutrients such as nitrogen, phosphorus and potassium and/or micronutrients such as manganese, iron, zinc and molybdenum. Of note for inclusion in component (f) are micronutrients such as manganese, iron, zinc and molybdenum. Fertilizers are more conveniently applied as mixtures prepared in a spray tank, and therefore typically the present composition does not comprise significant amounts of fertilizers. If component (f) comprises one or more fertilizers, they typically amount to at least about 0.1 % and not more than about 10% of the composition by weight, although greater amounts can be included.

Other formulation ingredients can be included in the present composition as component (f) such as rheology modifiers, dyes, and the like. These ingredients are known to one skilled in the art and can be found described, for example, *in* AcCutcheon 's, Volume 2: Functional Materials published by MC Publishing Company annually.

Preparation of the suspension concentrate composition of the present invention typically comprises milling a mixture of the cyantraniliprole active ingredient (i.e. component (a)) and water (i.e. component (c)) until the particles of cyantraniliprole have been milled to the desired particle size, typically less than 10 µm. Methods for making suspensions and dispersions of particles are well known and include ball-milling, bead-milling, sand-milling, colloid milling and air-milling combined with high-speed blending, which typically involves high shear. Of particular note is ball- or bead-milling for this step. Other components in the suspension concentrate, such as component (b), can be included in the mixture for milling or later mixed with the milled mixture. However, other components comprising solid particles initially having a particle size of greater than 10 µm and of low water solubility are typically included in the mixture for milling. Although nonionic EO/PO block copolymer component (b) and optional additional surfactant component (d) can be added after milling the mixture of component (a) and component (c), typically a portion of component (b) and/or component (d) is included in the mixture for milling to facilitate milling component (a) to small particle size (i.e. less than 10 µm).

When the present suspension concentrate composition comprises relatively high concentrations of component (b), it may be particularly advantageous to add most or all of component (b) after milling the mixture of component (a) and component (c). Often a shaker is suitable for mixing component (b) with the milled mixture of component (a) and component (c). However, depending upon the physical properties of component (b) and its concentration in the present composition, liquid crystalline phases can be formed that are viscous or even gel-like. For mixing such viscous or gel-like mixtures, double-screw kneaders or three-roller mills can be used.

The desired method for applying the diluted composition of the present invention, such as spraying, atomizing, dispersing or pouring, will depend on the desired objectives and the given circumstances, and can be readily determined by one skilled in the art. Although the insecticidal suspension concentrate composition of the present invention can be applied directly to an insect pest or its environment, the suspension concentrate composition is ordinarily first diluted with water to form a diluted composition, and then the insect pest or its environment is contacted with an insecticidally effective amount of the diluted composition to control the insect pest. After mixing with water, the resulting diluted composition formed from the present suspension concentrate composition typically comprises a suspension of solid particles of component (a). This diluted composition can be applied to an insect pest or its environment by a variety of means including spraying. The present insecticidal suspension concentrate composition after dilution with water, spraying plant foliage and then drying has been discovered to provide remarkably effective control of piercing-sucking insect pests of the order Homoptera feeding on the foliage. Such control can include killing the pests, interfering with their growth, development or reproduction, and/or inhibiting their feeding. Furthermore, promotion of absorption of cyantraniliprole into the foliage also increases resistance to subsequent wash-off (e.g., on exposure to rain).

Application of an insecticidally effective amount of the above-described diluted composition to plant foliage can control other phytophagous insect pests as well. Therefore an aspect of the present method is a method for protecting foliage of a plant from a phytophagous insect pest, the method comprising contacting the foliage with an insecticidally effective amount of the above-described diluted composition. The foliage of a wide variety of plant species can be protected by this method. Examples of such plant species include brassica (cole) crops such as broccoli, Brussels sprouts, cabbage, cauliflower and rapeseed (e.g., canola); other leafy vegetables such as celery, cress, endive, fennel, lettuce, parsley, rhubarb, spinach and Swiss chard; cucurbits such as cucumber, gourd, cantaloupe and other muskmelons, pumpkin, summer squash, watermelon and winter squash; solanaceous crops such as eggplant, pepper, potato and tomato; sweet potato and yam; legumes such as pea, bean and soybean; tree fruit such as pome (e.g., apple, pear), stone (e.g, peach, nectarine apricot, plum, plumcot, cherry) and citrus (e.g., orange, lemon, lime, tangerine, tangelo, grapefruit, pomelo); small fruit such as strawberry, blueberry, raspberry, blackberry and boysenberry; cereals such as wheat, oats, barley, rye, rice and maize; other crops such as sunflower, cotton and grape; pasture and turf grasses; and other plant species of landscape, horticulture and flower production.

This utility includes protecting crops and other plants that contain genetic material introduced by genetic engineering (i.e. transgenic) or modified by mutagenesis to provide advantageous traits. Examples of such traits include tolerance to herbicides, resistance to phytophagous pests (e.g., insects, mites, aphids, spiders, nematodes, snails, plant-pathogenic fungi, bacteria and viruses), improved plant growth, increased tolerance of adverse growing conditions such as high or low temperatures, low or high soil moisture, and high salinity, increased flowering or fruiting, greater harvest yields, more rapid maturation, higher quality and/or nutritional value of the harvested product, or improved storage or process properties of the harvested products. Transgenic plants can be modified to express multiple traits. Examples of plants containing traits provided by genetic engineering or mutagenesis include varieties of corn, cotton, soybean and potato expressing an insecticidal *Bacillus thuringiensis* toxin such as YIELD GARD^{®}, KNOCKOUT^{®}, STARLINK^{®}, BOLLGARD^{®}, NuCOTN^{®} and NEWLEAF^{®}, and herbicide-tolerant varieties of corn, cotton, soybean and rapeseed such as ROUNDUP READY^{®}, LIBERTY LINK^{®}, IMI^{®}, STS^{®} and CLEARFIELD^{®}, as well as crops expressing N-acetyltransferase (GAT) to provide resistance to glyphosate herbicide, or crops containing the HRA gene providing resistance to herbicides inhibiting acetolactate synthase (ALS). The present composition may interact synergistically with traits introduced by genetic engineering or modified by mutagenesis, thus enhancing phenotypic expression or effectiveness of the traits or increasing the insect pest control effectiveness of the present composition. In particular, the present composition may interact synergistically with the phenotypic expression of proteins or other natural products toxic to invertebrate pests to provide greater-than-additive control of these pests.

As referred to in this disclosure, the terms "insect pest" and "phytophagous insect pest" include larvae of the order Lepidoptera, such as armyworms, cutworms, loopers, and heliothines in the family Noctuidae (e.g., fall armyworm (*Spodoptera fugiperda* J. E. Smith), beet armyworm (*Spocloptera exigua* Hübner), black cutworm (*Agrotis ipsilon* Hufnagel), cabbage looper (*Trichoplusia ni* Hübner), tobacco budworm (*Heliothis virescens* Fabricius)); borers, casebearers, webworms, coneworms, cabbageworms and skeletonizers from the family Pyralidae (e.g., European corn borer (*Ostrinia nubilalis* Hübner), navel orangeworm (*Amyelois transitella* Walker), corn root webworm (*Crambus caliginosellus* Clemens), sod webworm (*Herpetogramma licarsisalis* Walker)); leafrollers, budworms, seed worms, and fruit worms in the family Tortricidae (e.g., codling moth (*Cydia pomonella* L. (L. means Linnaeus)), grape berry moth (*Endopiza viteana* Clemens), oriental fruit moth (*Grapholita molesta* Busck)); and many other economically important lepidoptera (e.g., diamondback moth (*Plutella xylostella* L. of family Plutellidae), pink bollworm (*Pectinophora gossypiella* Saunders of family Gelechiidae), gypsy moth (*Lymantria dispar* L. of family Lymantriidae)); foliar feeding larvae and adults of the order Coleoptera including weevils from the families Anthribidae, Bruchidae, and Curculionidae (e.g., boll weevil *(Anthonomus grandis* Boheman), rice water weevil (*Lissorhoptrus oryzophilus* Kuschel), rice weevil (*Sitophilus oryzae* L.)); flea beetles, cucumber beetles, rootworms, leaf beetles, potato beetles, and leafminers in the family Chrysomelidae (e.g., Colorado potato beetle (*Leptinotarsa decemlineata* Say), western corn rootworm (*Diabrotica virgifera virgifera* LeConte)); chafers and other beetles from the family Scaribaeidae (e.g., Japanese beetle (*Popi*/*lia japonica* Newman) and European chafer (*Rhizotrogus majalis* Razoumowsky)); wireworms from the family Elateridae and bark beetles from the family Scolytidae; adults and larvae of the order Dermaptera including earwigs from the family Forficulidae (e.g., European earwig (*Forficula auricularia* L.), black earwig (*Chelisoches morio* Fabricius)); adults and nymphs of the orders Hemiptera and Homoptera such as, plant bugs from the family Miridae, cicadas from the family Cicadidae, leafhoppers (e.g. *Empoasca* spp.) from the family Cicadellidae, planthoppers from the families Fulgoroidae and Delphacidae, treehoppers from the family Membracidae, psyllids from the family Psyllidae, whiteflies from the family Aleyrodidae, aphids from the family Aphididae, phylloxera from the family Phylloxeridae, mealybugs from the family Pseudococcidae, scales from the families Coccidae, Diaspididae and Margarodidae, lace bugs from the family Tingidae, stink bugs from the family Pentatomidae, cinch bugs (e.g., *Blissus* spp.) and other seed bugs from the family Lygaeidae, spittlebugs from the family Cercopidae squash bugs from the family Coreidae, and red bugs and cotton stainers from the family Pyrrhocoridae; adults and immatures of the order Orthoptera including grasshoppers, locusts and crickets (e.g., migratory grasshoppers (e.g., *Melanoplus sanguinipes* Fabricius, *M. differentialis* Thomas), American grasshoppers (e.g., *Schistocerca americana* Drury), desert locust (*Schistocerca* g*regaria* Forskal), migratory locust (*Locusta migratoria* L.), mole crickets (*Gryllotalpa* spp.)); adults and immatures of the order Diptera including leafminers, midges, fruit flies (Tephritidae), frit flies (e.g., *Oscinella frit* L.), soil maggots and other Nematocera; adults and immatures of the order Thysanoptera including onion thrips (*Thrips tabaci* Lindeman) and other foliar feeding thrips. Of note is the present method controlling a phytophagous insect pest in a taxonomic order selected from Hemiptera (particularly the families Aleyrodidae, Aphidadae, Cicadellidae, Delphacidae) and Lepidoptera (particularly the families Gelechiidae, Lymantriidae, Noctuidae, Plutellidae, Pyralidae and Torticidae). Of particular note is the present method controlling a phytophagous insect pest in a taxonomic family selected from Aleyrodidae, Aphidadae, Delphacidae and Cicadellidae.

Although a spray composition formed by diluting with water a sufficient concentration of the present suspension concentrate composition can provide sufficient efficacy for controlling insect pests, separately formulated adjuvant products can also be added to spray tank mixtures. These additional adjuvants are commonly known as "spray adjuvants" or "tank-mix adjuvants", and include any substance mixed in a spray tank to improve the performance of a pesticide treatment, such as by enhancing efficacy (e.g., biological availability, adhesion, penetration, uniformity of coverage and durability of protection), or minimizing or eliminating spray application problems associated with incompatibility, foaming, drift, evaporation, volatilization and degradation. As no single adjuvant generally can provide all these benefits, compatible adjuvants are often combined to perform multiple functions. To obtain optimal performance, adjuvants are selected with regard to the properties of the active ingredient, formulation and target (e.g., crops, insect pests).

Among the spray adjuvants, oils including crop oils, crop oil concentrates, vegetable oil concentrates and methylated seed oil concentrates are most commonly used to improve the efficacy of pesticides, possibly by means of promoting more even and uniform spray deposits. In situations where phytotoxicity potentially caused by oils or other water-immiscible liquids are of concern, spray compositions prepared from the composition of the present invention will generally not contain oil-based spray adjuvants. However, in situations where phytotoxicity caused by oil-based spray adjuvants is commercially insignificant, spray compositions prepared from the composition of the present composition can also contain oil-based spray adjuvants, which can potentially further increase control of insect pests, particularly foliar piercing-sucking pests, as well as rainfastness.

Products identified as "crop oil" typically contain 95 to 98% paraffin or naphtha-based petroleum oil and 1 to 2% of one or more surfactants functioning as emulsifiers. Products identified as "crop oil concentrates" typically consist of 80 to 85% of emulsifiable petroleum-based oil and 15 to 20% of nonionic surfactants. Products correctly identified as "vegetable oil concentrates" typically consist of 80 to 85% of vegetable oil (i.e. seed or fruit oil, most commonly from cotton, linseed, soybean or sunflower) and 15 to 20% of nonionic surfactants. Adjuvant performance can be improved by replacing the vegetable oil with methyl esters of fatty acids that are typically derived from vegetable oils. Examples of methylated seed oil concentrates include MSO^{®} Concentrate (UAP-Loveland Products, Inc.) and Premium MSO Methylated Spray Oil (Helena Chemical Company). The amount of oil-based adjuvants added to spray mixtures generally does not exceed about 2.5% by volume, and more typically the amount is from about 0.1 to about 1% by volume. The application rates of oil-based adjuvants added to spray mixtures are typically between about 1 to about 5 L per hectare, and methylated seed oil-based adjuvants in particular are typically used at a rate from about 1 to about 2.5 L per hectare.

Spray adjuvants containing oils, with or without emulsifiers, particularly methylated seed oils, are compatible in tank mixtures with the present insecticidal suspension concentrate composition. Therefore one embodiment of the present invention relates to a method for controlling an insect pest, comprising diluting the insecticidal suspension concentrate composition of the present invention with water, and optionally adding an adjuvant such as a methylated seed oil (in any order of addition or mixing) to form a diluted composition, and contacting the insect pest or its environment with an effective amount of said diluted composition.

The ratio of the volume of insecticidal suspension concentrate composition to the volume of water used to dilute it is generally in the range from about 1 : 100 to about 1 : 1000, more typically from about 1 : 200 to about 1 : 800, and most typically from about 1 : 300 to about 1 : 600. The amount of diluted composition needed for effective control of an insect pest (i.e. insecticidally effective amount) depends upon a variety of factors including the concentration of cyantraniliprole (i.e. component (a)) and any other insecticides in the insecticidal suspension concentrate composition, the extent of dilution in water, the susceptibility of the insect pest to cyantraniliprole and any other insecticides and environmental conditions as well as the concentration of other adjuvants, but can be easily determined by calculation and simple experimentation by one skilled in the art.

Without further elaboration, it is believed that one skilled in the art using the preceding description can utilize the present invention to its fullest extent. The following Examples are, therefore, to be construed as merely illustrative and not limiting of the disclosure in any way whatsoever.

Table 1 describes the nonionic EO/PO block copolymers used in the Examples and Comparative Examples. All these EO/PO block copolymers are products of BASF Corporation. Molecular weight and HLB values for these EO/PO block copolymers are from Guo et al., Journal of Colloid and Interface Science 2006, 298, 441-450. Data for TETRONIC 904 and 90R4 are from U.S. Patents 7 534 324 and 7 541 386, respectively.

**Table 1. Identity of Nonionic EO/PO Block Copolymers**

| Tradename | Type | MW (daltons) | HLB |
|---|---|---|---|
| PLURONIC L31 | Poloxamer | 1100 | 5 |
| PLURONIC L44 | Poloxamer | 2200 | 16 |
| PLURONIC L64 | Poloxamer | 2900 | 15 |
| PLURONIC P103 | Poloxamer | 4950 | 9 |
| PLURONIC P104 | Poloxamer | 5900 | 13 |
| PLURONIC F108 | Poloxamer | 14600 | 27 |
| PLURONIC 25R4 | Reverse Poloxamer | 3600 | 8 |
| TETRONIC 904 | Poloxamine | 6700 | 15 |
| TETRONIC 90R4 | Reverse Poloxamine | 7240 | 7 |

Table 2 describes the other ingredients used in the Examples and Comparative Examples.

**Table 2. Identity of Other Ingredients**

| Name | Identity |
|---|---|
| Compound 1 | 3-Bromo-1-(3-chloro-2-pyridinyl)-*N*-[4-cyano-2-methyl-6-[(methylamino)carbonyl]phenyl]-1*H*-pyrazole-5-carboxamide |
| ATLOX 4913 (Croda) | Methacrylic acid/methyl methacrylate/polyethylene glycol graft copolymer |
| ATLOX 4894 (Croda) | Mixture of polyoxyethylene alkyl ether and polyoxyethylene/polyoxypropylene block copolymer |
| AGNIQUE DFM 111S (Cognis Corp) | Dimethyl silicone |
| PROXEL GXL (Arch) | Sodium 1,2-benzisothiazol-3(2*H*)-one |
| RHODOPOL 23 (Rhodia) | Xanthan gum (Heteropolysaccharide) |
| ACTI-GEL 208 (Active Minerals) | Hydrous magnesium aluminosilicate |

PCT Patent Publication WO2006/062978 discloses methods for preparing 3-bromo-1-(3-chloro-2-pyridinyl)-*N*-[4-cyano-2-methyl-6-[(methylamino)carbonyl]phenyl]-1*H-*pyrazole-5-carboxamide (i.e. Compound 1). Example 15 of this publication discloses preparation of Compound 1 as a powder melting at 177-181 °C (with apparent decomposition), which is a polymorph crystal form that is readily hydrated. Example 15 also discloses recrystallization from 1-propanol to provide crystals melting at 217-219 °C, which is an anhydrous polymorph crystal form that is resistant to hydration. The samples of Compound 1 used in the present Examples and Comparative Examples were assayed to contain about 94-96% by weight of Compound 1, which is believed to be a mixture of these two polymorph crystal forms.

The amounts and weight percentages of Compound 1 reported in the examples disclosed below refer to the weight of technical material (containing about 94-96% of Compound 1), not the actual weight of Compound 1. Similarly, the reported ratios of EO/PO copolymer to Compound 1 are calculated based on weight of technical material containing Compound 1, not the actual weight of Compound 1 itself.

### EXAMPLES 1-8 AND COMPARATIVE EXAMPLE B

### General method for preparing compositions of Examples 1-8 and Comparative Example B

In a 250-mL stainless steel beaker equipped with a overhead stirrer, the ingredients listed in Tables 3 and 4 are mixed with stirring to make 100 g of a mixture. The mixture is homogenized using a rotor stator mixer (Polytron PT 3000, Kinematica AG, Switzerland), and then milled to about 1 micron median particle size using a 50 mL Eiger Motormill (a horizontal bead mill manufactured by Eiger Machinery Inc., Chicago, Illinois) to produce the respective suspension concentrate Example Composition.

**Table 3. Composition Ingredients of Examples 1-8**

| Ingredient | Function | Weight % |
|---|---|---|
| Compound 1 | Active ingredient | 4.29 |
| ATLOX 4913 | Dispersant | 0.64 |
| ATLOX 4894 | Dispersant | 0.43 |
| ACTI-GEL 208 | Thickener | 0.50 |
| AGNIQUE DFM 111 S | Anti-foaming agent | 0.11 |
| PROXEL GXL | Biocide | 0.05 |
| Propylene glycol | Antifreeze agent | 4.00 |
| RHODOPOL 23 | Thickener | 0.10 |
| Water | Diluent | 40.00 |
| EO/PO Block Copolymer | Adjuvant | 49.88 |
| (See Table 4) | | |

**Table 4. EO/PO Block Copolymers of Examples 1-8**

| Example | Tradename |
|---|---|
| 1 | PLURONIC L31 |
| 2 | PLURONIC L44 |
| 3 | PLURONIC L64 |
| 4 | PLURONIC P103 |
| 5 | PLURONIC P104 |
| 6 | PLURONIC 25R4 |
| 7 | TETRONIC 904 |
| 8 | TETRONIC 90R4 |
| Comparative Example B | PLURONIC F 108 |

### Testing for Control of Whitefly

For evaluating control of silverleaf whitefly (*Bemisia tabaci* Gennadius), each test unit consists of a 14-21-day-old cotton plant with at least two true leaves, which is planted in Redi-earth® medium (Scotts Co.). The plants are placed in screened cages, where whitefly adults are introduced and allowed to lay eggs for approximately twenty-four hours. Only plants showing egg lay are used for testing. Before spraying the test solutions, the plants are checked again for egg hatch and crawler settlement. One leaf per plant is considered as one replication; four replications are used per treatment.

All formulated materials are diluted with water to make test mixtures containing 200 ppm of cyantraniliprole. The test mixtures for spraying are homogeneous dispersions with the appearance of cloudy water. The plants are sprayed using a TeeJet flat fan spray nozzle positioned 7.5 inches (19 cm) above the tallest plant. The spray flow rate is adjusted to 5.5 mL/sec for an equivalent of 468 L/ha.

After spraying, plants are allowed to dry in a ventilated enclosure and held for six days in a growth chamber at 50% relative humidity, 16 h with light (as daytime) at 28 °C and 8 h in dark (as nighttime) at 24 °C. After removing all leaves from each test plant, evaluation is made by counting dead and live nymphs present on the underside of the leaves. Using the collected data, the percent mortality for each treatment is calculated as the measure of control.

The compositions of Examples 1-8 are found to provide greater than 50% control. In contrast, a composition prepared according to Comparative Example A of PCT publication WO2008/069990 (hereby identified as present Comparative Example A), which is a cyantraniliprole aqueous suspension concentrate comprising less than 2% of EO/PO block copolymer, is found to provide less than 10% control. Also, the composition of present Comparative Example B in which the EO/PO block copolymer is PLURONIC F108 is found to provide less than 10% control.

### EXAMPLES 9-11 AND COMPARATIVE EXAMPLE C

The compositions of Examples 9-11 were prepared by mixing a milled aqueous suspension of cyantraniliprole (subsequently identified as the "Mill Base") with the nonionic EO/PO block copolymer.

### Preparation of Mill Base for Compositions of Examples 9-11 and Comparative Example C

ATLOX 4913 (9.135 g) and ATLOX 4894 (6.105 g) were mixed with water (74.775 g) in a baffled 500-mL metal beaker. To the resulting solution was added Compound 1 (60.000 g). The resulting mixture was mixed carefully until all the Compound 1 had wetted into the solution. The mixture was then milled for 210 minutes using 120 cm³ of 0.6 to 0.8 mm ER120S beads (SEPR, Paris, France) and a standard 1.75-inch (4.44-cm) high-speed dispersion blade made of polyurethane from Firestone Associates (Philadelphia, PA) rotated at 3000 rpm while the beaker was cooled with water at 10 °C. The prepared mill base, containing 40 weight % of Compound 1, was a well-dispersed, inviscous, white suspension. Light scattering analysis using a Malvern Mastersizer® 2000 (Malvern Instruments, Malvern, Worcestershire, UK) indicated the median particle size to be 1.0 µm.

### Preparation of Compositions of Examples 9A-1 1D, and Comparative Example C

The amount of water specified in Table 5 for each Example was weighed into a capped 20 cm³ glass tube, followed by the amount of EO/PO block copolymer specified in Table 5. The two components were mixed well by shaking, and then Mill Base described above (1.75 g) containing Compound 1 (0.70 g) was added. The resulting mixture was shaken well, and then the tube containing the mixture was placed in a paint can on a roller (US Stoneware, Mahwah, NJ) and rotated end-over-end at about 60 rpm overnight. Most of the resulting dispersions were white free-flowing liquids, but some of the compositions (Examples 10C, 10D, 11C, 11D) containing higher amounts of EO/PO block copolymers were viscous pastes.

Also prepared was the composition of Comparative Example C, which omits including EO/PO block copolymers beyond the small amount of an EO/PO block copolymer included as one of two constituents of the ATLOX 4894 surfactant used to prepare the Mill Base. Whether the properties of the EO/PO block copolymer in ATLOX 4894 satisfy the requirements of component (b) of the present invention is unknown to the inventors. Because the characteristics of the EO/PO block copolymer constituent in ATLOX 4894 are not known and the amount is small compared to the amounts of the PLURONIC EO/PO block copolymers, the ATLOX 4894 EO/PO block copolymer is not included in the calculation of ratio of EO/PO block copolymer to Compound 1 for Examples 9A through 11D.

**Table 5. Selected Components of Compositions of Examples 9A-1 1D and Comparative Example C**

| Example | Water | EO/PO Block Copolymer | | Compound 1 | Ratio of EO/PO Copolymer to Compound 1 |
|---|---|---|---|---|---|
| | Amount (g) | Identity | Amount (g) | Amount (g) | |
| 9A | 7.55 | PLURONIC L64 | 0.70 | 0.70 | 1 : 1 |
| 9B | 6.75 | PLURONIC L64 | 1.50 | 0.70 | 2.1 : 1 |
| 9C | 5.25 | PLURONIC L64 | 3.00 | 0.70 | 4.3 : 1 |
| 9D | 2.15 | PLURONIC L64 | 6.10 | 0.70 | 8.7 : 1 |
| 10A | 7.55 | PLURONIC P103 | 0.70 | 0.70 | 1 : 1 |
| 10B | 6.75 | PLURONIC P103 | 1.50 | 0.70 | 2.1 : 1 |
| 10C | 5.25 | PLURONIC P103 | 3.00 | 0.70 | 4.3 : 1 |
| 10D | 2.15 | PLURONIC P103 | 6.10 | 0.70 | 8.7 : 1 |
| 11A | 7.55 | PLURONIC P104 | 0.70 | 0.70 | 1 : 1 |
| 11B | 6.75 | PLURONIC P104 | 1.50 | 0.70 | 2.1 : 1 |
| 11C | 5.25 | PLURONIC P104 | 3.00 | 0.70 | 4.3 : 1 |
| 11D | 2.15 | PLURONIC P104 | 6.10 | 0.70 | 8.7 : 1 |
| Comparative Example C | 8.25 | - | < 0.07 | 0.70 | < 0.1 : 1 |

### Testing for Control of Whitefly

The compositions of Examples 9A-9D, 10A-10B and 11A-11D and Comparative Example C were mixed with water to form a spray mixture containing 200 ppm of Compound 1 and tested using the protocol described for testing the compositions of Examples 1-8. The compositions of Examples 10C and 10D were not tested, because the viscosity of the compositions prevented rapid mixing with water using the equipment ordinarily employed for this test. Test results are listed in Table 6.

**Table 6. Control of Whitefly by 200 ppm of Compound 1**

| Example | EO/PO Block Copolymer | Ratio of EO/PO Copolymer to Compound 1 | Percent Control |
|---|---|---|---|
| 9A | PLURONIC L64 | 1 : 1 | 14 |
| 9B | PLURONIC L64 | 2.1 : 1 | 36 |
| 9C | PLURONIC L64 | 4.3 : 1 | 78 |
| 9D | PLURONIC L64 | 8.7 : 1 | 92 |
| 10A | PLURONIC P103 | 1 : 1 | 4 |
| 10B | PLURONIC P103 | 2.1 : 1 | 73 |
| 11A | PLURONIC P104 | 1 : 1 | 27 |
| 11B | PLURONIC P104 | 2.1 : 1 | 54 |
| 11C | PLURONIC P104 | 4.3 : 1 | 89 |
| 11D | PLURONIC P104 | 8.7 : 1 | 89 |
| Comparative Example C | - | < 0.1 : 1 | 5 |

To determine the LC₅₀ and LC₉₀ values for control of whitefly by cyantraniliprole in spray mixtures prepared from some of the Example compositions, the general test protocol described above for Examples 1-8 was used, except that the tests were conducted using four different amounts of the compositions (thus providing four different concentrations of Compound 1 in the spray mixtures). Using probit analysis, the doses necessary to kill 50% and 90% (i.e. LC₅₀ and LC₉₀) of the whitefly population were calculated, and the results are listed in Table 7. Meaningful LC₅₀ and LC₉₀ values could not be calculated for control of whitefly by cyantraniliprole in spray mixtures prepared from the composition of Comparative Example A (Comparative Example A of PCT publication WO2008/069990), because negligible control was recorded at the application rates tested.

**Table 7. LC₅₀ and LC₉₀ Values for Control of Whitefly by Compound 1**

| Example | EO/PO Block Copolymer | Ratio of EO/PO Copolymer to Compound 1 | LC₅₀ | LC₉₀ |
|---|---|---|---|---|
| 9A | PLURONIC L64 | 1 : 1 | 342 | 679 |
| 9B | PLURONIC L64 | 2.1 : 1 | 175 | 379 |
| 9C | PLURONIC L64 | 4.3 : 1 | 157 | 311 |
| 9D | PLURONIC L64 | 8.7 : 1 | 95 | 216 |
| 10B | PLURONIC P103 | 2.1 : 1 | 154 | 268 |
| 11A | PLURONIC P104 | 1 : 1 | 226 | 492 |
| 11B | PLURONIC P104 | 2.1 : 1 | 137 | 465 |
| Comparat ive Example A | - | <0.1 : 1(*) | (**) | (**) |

| | | | | |
|---|---|---|---|---|
| (*) The composition of Comparative Example A contains a comparatively small amount of EO/PO block copolymer as one of two constituents in the 2% by weight of ATLOX 4894 surfactant component. Whether the properties of the EO/PO block copolymer in ATLOX 4894 satisfy the requirements of component (b) of the present invention is unknown to the inventors. (**) LC₅₀ and LC₉₀ could not be calculated due to negligible control at rates tested. | | | | |

## Claims

1. An insecticidal suspension concentrate composition comprising by weight based on the total weight of the composition:
(a) from 0.3 to 30% of 3-bromo-1-(3-chloro-2-pyridinyl)-*N*-[4-cyano-2-methyl-6-[(methylamino)carbonyl]phenyl]-1*H*-pyrazole-5-carboxamide;
(b) from 5 to 70% of a nonionic ethylene oxide-propylene oxide block copolymer component having a water solubility of at least about 5% by weight at 20 °C, a hydrophilic-lipophilic balance value ranging from 5 to 18 and an average molecular weight ranging from 900 to 20000 daltons; and
(c) from 20 to 95% of water,
wherein the composition comprises not more than 5% by weight of water-immiscible liquid compounds.

2. The composition of Claim 1 wherein component (b) is from 20 to 70% of the composition by weight.

3. The composition of any one of Claims 1 and 2 wherein the ratio of component (b) to component (a) is at least about 1 : 1 by weight.

4. The composition of any one of Claims 1 through 3 wherein the hydrophilic-lipophilic balance value of component (b) ranges from 8 to 15.

5. The composition of any one of Claims 1 through 4 wherein the average molecular weight of component (b) ranges from 2000 to 8000 daltons,

6. The composition of any one of Claims 1 through 5 wherein component (b) comprises one or more nonionic ethylene oxide-propylene oxide block copolymers selected from the group consisting ofpoloxamers, reverse poloxamers, poloxamines and reverse poloxamines.

7. The composition of Claim 6 wherein component (b) comprises one or more nonionic ethylene oxide-propylene oxide block copolymers selected from poloxamers.

8. The composition of any one of Claims 1 through 7 further comprising from 0.1% to 15% by weight of one or more biologically active agents other than 3-bromo-1-(3-chloro-2-pyridinyl)-*N*-[4-cyano-2-methyl-6-[(methylamino)carbonyl]phenyl]-1*H*-pyrazole-5-carboxamide.

9. The composition of Claim 8 wherein the one or more biologically active agents are selected from abamectin, acetamiprid, acrinathrin, avermectin, azadirachtin, azinphos-methyl, bifenthrin, buprofezin, cartap, chlorfenapyr, chlorpyrifos, clothianidin, cyfluthrin, beta-cyfluthrin, cyhalothrin, lambda-cyhalothrin, cypermethrin, cyromazine, deltamethrin, diafenthiuron, dieldrin, diflubenzuron, dimethoate, dinotefuran, emamectin benzoate, endosulfan, esfenvalerate, ethiprole, fenothiocarb, fenoxycarb, fenvalerate, fipronil, flonicamid, flubendiamide, flufenoxuron, hexaflumuron, hydramethylnon, imidacloprid, indoxacarb, lufenuron, metaflumizone, methomyl, methoxyfenozide, milbemycin oxime, nicotine, nitenpyram, nithiazine, novaluron, oxamyl, pymetrozine, pyrethrin, pyridaben, pyridalyl, pyrifluquinazon, pyriproxyfen, ryanodine, spinetoram, spinosad, spirodiclofen, spiromesifen, spirotetramat, tebufenozide, thiacloprid, thiamethoxam, thiodicarb, thiosultap-sodium, tolfenpyrad, tralomethrin, triazamate, triflumuron, *Bacillus thuringiensis* subsp. *aizawai, Bacillus thuringiensis* subsp. *kurstaki,* nucleopolyhedro virus and an encapsulated delta-endotoxin of *Bacillus thuringiensis.*

10. A non-therapeutic method for controlling an insect pest comprising diluting the composition of any one of Claims 1 through 9 with water to form a diluted composition, and contacting the insect pest or its environment with an insecticidally effective amount of said diluted composition.

11. The non-therapeutic method of Claim 10 wherein plant foliage in the environment of the insect pest is contacted with the insecticidally effective amount of said diluted composition.

12. The non-therapeutic method of Claim 10 or Claim 11 wherein the insect pest is in a taxonomic family selected from Aleyrodidae, Aphidadae, Delphacidae and Cicadellidae.

## Patentansprüche

1. Insektizide Suspensionskonzentratzusammensetzung umfassend, auf das Gewicht auf der Basis des Gesamtgewichts der Zusammensetzung bezogen:
(a) 0,3 bis 30 % 3-Brom-1-(3-chlor-2-pyridinyl)-N-[4-cyano-2-methyl-6-[(methylamino)carbonyl]phenyl]-1H-pyrazol-5-carboxamid;
(b) 5 bis 70 % einer nichtionischen Ethylenoxid-Propylenoxid-Blockcopolymerkomponente, die eines Wasserlöslichkeit von mindestens etwa 5 Gew.-% bei 20 °C, einen Hydrophil-Lipophil-Gleichgewichtswert im Bereich von 5 bis 18 und ein durchschnittliches Molekulargewicht im Bereich von 900 bis 20000 Dalton aufweist; und
(c) 20 bis 95 % Wasser;
wobei die Zusammensetzung nicht mehr als 5 Gew.-% mit Wasser nicht mischbare flüssige Verbindungen umfasst.

2. Zusammensetzung nach Anspruch 1, wobei die Komponente (b) 20 bis 70 % der Zusammensetzung, auf das Gewicht bezogen, beträgt.

3. Zusammensetzung nach einem der Ansprüche 1 und 2, wobei das Verhältnis der Komponente (b) zur Komponente (a) mindestens etwa 1 : 1, auf das Gewicht bezogen, beträgt.

4. Zusammensetzung nach einem der Ansprüche 1 bis 3, wobei der Hydrophil-Lipophil-Gleichgewichtswert der Komponente (b) im Bereich von 8 bis 15 liegt.

5. Zusammensetzung nach einem der Ansprüche 1 bis 4, wobei das durchschnittliche Molekulargewicht der Komponente (b) im Bereich von 2000 bis 8000 Dalton liegt.

6. Zusammensetzung nach einem der Ansprüche 1 bis 5, wobei die Komponente (b) ein oder mehrere nichtionische Ethylenoxid-Propylenoxid-Blockcopolymere umfasst ausgewählt aus der Gruppe bestehend aus Poloxameren, reversen Poloxameren, Poloxaminen und reversen Poloxaminen.

7. Zusammensetzung nach Anspruch 6, wobei die Komponente (b) ein oder mehrere nichtionische Ethylenoxid-Propylenoxid-Blockcopolymere ausgewählt unter Poloxameren, umfasst.

8. Zusammensetzung nach einem der Ansprüche 1 bis 7, des Weiteren 0,1 bis 15 Gew.-% eines oder mehrerer biologisch aktiver Mittel, bei denen es sich nicht um 3-Brom-1-(3-chlor-2-pyridinyl)-N-[4-cyano-2-methyl-6-[(methylamino)carbonyl]phenyl]-1H-pyrazol-5-carboxamid handelt, umfassend.

9. Zusammensetzung nach Anspruch 8, wobei das eine oder die mehreren biologisch aktiven Mittel unter Abamectin, Acetamiprid, Acrinathrin, Avermectin, Azadirachtin, Azinphos-Methyl, Bifenthrin, Buprofezin, Cartab, Chlorfenapyr, Chlorpyrifos, Clothianidin, Cyfluthrin, Beta-Cyfluthrin, Cyhalothrin, Lambda-Cyhalothrin, Cypermethrin, Cyromazin, Deltamethrin, Diafenthiuron, Dieldrin, Diflubenzuron, Dimethoat, Dinotefuran, Emamectinbenzoat, Endosulfan, Esfenvalerat, Ethiprol, Fenothicarb, Fenoxycarb, Fenvalerat, Fipronil, Flonicamid, Flubendiamid, Flufenoxuron, Hexaflumuron, Hydramethylnon, Imidacloprid, Indoxacarb, Lufenuron, Metaflumizon, Methomyl, Methoxyfenozid, Milbemycinoxim, Nicotin, Nitenpyram, Nithiazin, Novaluron, Oxamyl, Pymetrozin, Pyrethrin, Pyridaben, Pyridalyl, Pyrifluchinazon, Pyriproxyfen, Ryanodin, Spinetoram, Spinosad, Spirodiclofen, Spiromesifen, Spirotetramat, Tebufenozid, Thiacloprid, Thiamethoxam, Thiodicarb, Thiosultap-Natrium, Tolfenpyrad, Tralomethrin, Triazamat, Triflumuron, *Bacillus thuringiensis subsp*.aizawai, *Bacillus thuringiensis* subsp. kurstaki, Nucleopolyhedrovirus und einem verkapselten Delta-Endotoxin von *Bacillus thuringiensis* ausgewählt wird.

10. Nichttherapeutisches Verfahren zum Bekämpfen einer Insektenplage, umfassend das Verdünnen der Zusammensetzung nach einem der Ansprüche 1 bis 9 mit Wasser unter Bildung einer verdünnten Zusammensetzung und das Kontaktieren der Insektenplage oder ihrer Umgebung mit einer insektizid wirksamen Menge der verdünnten Zusammensetzung.

11. Nichttherapeutisches Verfahren nach Anspruch 10, wobei Pflanzenblattwerk in der Umgebung der Insektenplage mit der insektizid wirksamen Menge der verdünnten Zusammensetzung kontaktiert wird.

12. Nichttherapeutisches Verfahren nach Anspruch 10 oder Anspruch 11, wobei die Insektenplage eine taxonomische Familie ist ausgewählt unter Aleyrodidae, Aphidadae, Delphacidae und Cicadellidae

## Revendications

1. Composition insecticide sous forme de suspension concentrée comprenant en poids sur la base du poids total de la composition:
(a) de 0,3 à 30 % de 3-bromo-1-(3-chloro-2-pyridinyl)-*N*-[4-cyano-2-méthyl-6-[(méthylamino)carbonyl]phényl]-1*H*-pyrazole-5-carboxamide;
(b) de 5 à 70 % d'un composant copolymère séquencé non ionique d'oxyde d'éthylène-oxyde de propylène ayant une solubilité dans l'eau d'au moins environ 5 % en poids à 20°C, une valeur d'équilibre hydrophile-lipophile s'étendant de 5 à 18 et un poids moléculaire moyen s'étendant de 900 à 20 000 daltons; et
(c) de 20 à 95 % d'eau,
dans laquelle la composition comprend pas plus de 5 % en poids de composés liquides non miscibles dans l'eau.

2. Composition selon la revendication 1, dans laquelle le composant (b) représente 20 à 70 % de la composition en poids.

3. Composition selon l'une quelconque des revendications 1 et 2, dans laquelle le rapport du composant (b) au composant (a) est d'au moins environ 1:1 en poids.

4. Composition selon l'une quelconque des revendications 1 jusqu'à 3, dans laquelle la valeur d'équilibre hydrophile-lipophile du composant (b) s'étend de 8 à 15.

5. Composition selon l'une quelconque des revendications 1 jusqu'à 4, dans laquelle le poids moléculaire moyen du composant (b) s'étend de 2 000 à 8 000 daltons.

6. Composition selon l'une quelconque des revendications 1 jusqu'à 5, dans laquelle le composant (b) comprend un ou plusieurs copolymère(s) séquencés non ionique(s) d'oxyde d'éthylène-oxyde de propylène sélectionné(s) parmi le groupe constitué des poloxamères, des poloxamères inverses, des poloxamines et des poloxamines inverses.

7. Composition selon la revendication 6, dans laquelle le composant (b) comprend un ou plusieurs copolymère(s) séquencés non ionique(s) d'oxyde d'éthylène-oxyde de propylène sélectionné(s) parmi les poloxamères.

8. Composition selon l'une quelconque des revendications 1 jusqu'à 7, comprenant en outre de 0,1 % à 15 % en poids d'un ou plusieurs agent(s) biologiquement actif(s) autre(s) que le 3-bromo-1-(3-chloro-2-pyridinyl)-*N*-[4-cyano-2-méthyl-6-[(méthylamino)carbonyl]phényl]-1*H*-pyrazole-5-carboxamide.

9. Composition selon la revendication 8, dans laquelle le un ou les plusieurs agent(s) biologiquement actif(s) est(sont) sélectionné(s) parmi l'abamectine, l'acétamipride, l'acrinathrine, l'avermectine, l'azadirachtine, l'azinphos-méthyle, la bifenthrine, la buprofézine, le cartap, le chlorfénapyr, le chlorpyrifos, le clothianidine, la cyfluthrine, la bêta-cyfluthrine, la cyhalothrine, la lambda-cyhalothrine, la cyperméthrine, la cyromazine, la deltaméthrine, le diafenthiuron, la dieldrine, le diflubenzuron, le diméthoate, le dinotéfurane, le benzoate d'émamectine, l'endosulfan, l'esfenvalérate, l'éthiprole, le fénothiocarbe, le fénoxycarbe, le fenvalérate, le fipronil, le flonicamid, le flubendiamide, le flufénoxuron, l'hexaflumuron, l'hydraméthylnone, l'imidaclopride, l'indoxacarbe, le lufénuron, la métaflumizone, le méthomyl, le méthoxyfénozide, la milbémycine oxime, la nicotine, le nitenpyrame, la nithiazine, le novaluron, l'oxamyle, la pymétrozine, la pyréthrine, le pyridabène, le pyridalyl, la pyrifluquinazone, le pyriproxyfène, la ryanodine, le spinétoram, le spinosad, le spirodiclofène, le spiromésifène, le spirotétramate, le tébufénozid, le thiaclopride, le thiaméthoxam, le thiodicarb, thiosultap-sodique, le tolfenpyrad, la tralométhrine, le triazamate, le triflumuron, la sous-espèce *aizawai* du *Bacillus thuringiensis,* la sous-espèce *kurstaki* du *Bacillus thuringiensis,* un virus du genre polyhèdre nucléaire et une delta-endotoxine encapsulée du *Bacillus thuringiensis.*

10. Procédé non thérapeutique de contrôle d'un ravageur de type insecte comprenant la dilution de la composition selon l'une quelconque des revendications 1 jusqu'à 9 avec de l'eau pour former une composition diluée, et la mise en contact du ravageur de type insecte ou de son environnement avec une quantité efficace au plan insecticide de ladite composition diluée.

11. Procédé non thérapeutique selon la revendication 10, dans lequel le feuillage de la plante dans l'environnement du ravageur de type insecte est mis en contact avec la quantité efficace au plan insecticide de ladite composition diluée.

12. Procédé non thérapeutique selon la revendication 10 ou la revendication 11, dans lequel le ravageur de type insecte est une famille taxonomique sélectionnée parmi les Aleurodidae, les Aphididae, les Delphacidae et les Cicadellidae.
